# EUROPÄISCHE PATENTSCHRIFT

(11) **EP 2 856 176 B1**
(45) Veröffentlichungstag und Bekanntmachung des Hinweises auf die Patenterteilung: **09.03.2022**
(21) Anmeldenummer: 13729617.4
(22) Anmeldetag: 23.05.2013
(51) Int. Cl.: G01N 35/00, B01F 9/10

(54) **PROBENVERARBEITUNGSSYSTEM ZUM VERARBEITEN VON BIOLOGISCHEN PROBEN**
SAMPLE PROCESSING SYSTEM FOR PROCESSING BIOLOGICAL SAMPLES
SYSTÈME DE TRAITEMENT D'ÉCHANTILLONS UTILISÉ POUR LE TRAITEMENT D'ÉCHANTILLONS BIOLOGIQUES

(30) Priorität: 24.05.2012 DE 102012208707
(43) Veröffentlichungstag der Anmeldung: 08.04.2015
(73) Patentinhaber: Hamilton Bonaduz AG, 7402 Bonaduz (CH)
(72) Erfinder: GIOVANOLI, Nando, 7457 Bivio (CH)
(74) Vertreter: Müller Hoffmann & Partner
(86) Internationale Anmeldenummer: PCT/EP2013/060693
(87) Internationale Veröffentlichungsnummer: WO 2013/174961

(56) Entgegenhaltungen:
- EP-A2- 1 407 861
- WO-A1-2006/075201
- WO-A1-2008/067844
- WO-A1-2010/056903
- DE-A1-102011 055 899
- JP-A- 2004 028 963
- US-A- 4 845 025
- US-A1- 2002 102 736
- US-A1- 2008 085 507
- None

## Beschreibung

Die vorliegende Erfindung betrifft ein Probenverarbeitungssystem zum Verarbeiten von biologischen Proben, insbesondere Körperflüssigkeiten wie Blut, Speichel, Sekrete und dergleichen oder Gewebeproben, insbesondere zur Vorbereitung von Proben für eine DNA-Analyse mittels PCR, umfassend eine Probenverarbeitungsvorrichtung
mit einer Aufnahmeplatte, wobei die Aufnahmeplatte (14) in einer durch eine erste und eine zweite Richtung (X, Y) definierten Ebene im Wesentlichen horizontal angeordnet ist;
mit einem ersten und einem zweiten Arbeitsarm, wobei der erste und der zweite Arbeitsarm relativ zur Aufnahmeplatte, vorzugsweise entlang einem ersten Rand der Aufnahmeplatte, in der ersten Richtung (X) beweglich sind, und wobei sich der erste und der zweite Arbeitsarm im Wesentlichen parallel zueinander in der zweiten Richtung über die Aufnahmeplatte erstrecken, wobei an dem ersten Arbeitsarm wenigstens eine in der zweiten Richtung (Y) und in einer zur ersten und zweiten Richtung orthogonalen dritten Richtung (Z) bewegliche Pipettiervorrichtung angebracht ist und wobei an dem zweiten Arbeitsarm wenigstens eine in der zweiten Richtung (Y) und in einer zur ersten und zweiten Richtung orthogonalen dritten Richtung (Z) bewegliche Greifvorrichtung angebracht ist, wobei an der Greifvorrichtung vorgesehene Greifer um eine zur dritten Richtung (Z) parallele Greiferdrehachse drehbar sind; und mit einer Steuereinrichtung zur Ansteuerung der Pipettiervorrichtung und der Greifvorrichtung;

mehrere mit Proben, insbesondere flüssigen Proben befüllte oder mit Proben oder Reagenzien befüllbare Probenbehälter,
mehrere mittels der Pipettiervorrichtung verwendbare Pipettierspitzen zum Aspirieren und Dispensieren von Probenflüssigkeit oder weiteren für die Probenverarbeitung erforderlichen Reagenzien, wie etwa ein Lysis-Puffer,
wobei die Probenbehälter und die Pipettierspitzen mittels zugehöriger Probenbehälterträger bzw. Pipettierspitzenträger auf der Aufnahmeplatte angeordnet sind.

Ein Beispiel eines derartigen Probenverarbeitungssystems ist aus der WO 2010/056903 A1 bekannt. Bei diesem bekannten Probenverarbeitungssystem werden Probenbehälterträger, in welchen die Probenbehälter matrixförmig angeordnet sind, auf einer ersten Arbeitsebene manuell in die Probenverarbeitungsvorrichtung abgegeben. Die Probenbehälter werden anschließend einzeln aus den Probenbehälterträgern entnommen mittels eines Roboterarms, welcher einen ergriffenen Probenbehälter zu einem Barcodeleser und anschließend zu einer Mischvorrichtung transportiert. Nach dem Mischen wird der Probenbehälter durch einen anderen Greifer zu einer Halterung transportiert und darin festgeklemmt, so dass mittels des Greifers ein auf den Probenbehälter geschraubter Verschlussdeckel abgeschraubt und entfernt werden kann. Nach dem Öffnen des Verschlussdeckels wird dieser vom Greifer gehalten, und mittels einer Pipettiervorrichtung wird Probenflüssigkeit aus dem Probenbehälter entnommen und in einen anderen Probenbehälter abgegeben (sogenannte Aliquotierung). Nach dem Pipettieren wird der erste Probenbehälter wieder verschlossen und zurück in den Probebehälterträger gestellt. Die aliquotierte Probe durchläuft anschließend weitere Verarbeitungsschritte, wie etwa Erhitzen, Mischen, Pipettieren im Hinblick auf die durchzuführende Analyse. Die unterschiedlichen Verarbeitungsschritte in diesem System werden auf unterschiedlichen Ebenen, die sich teilweise überlagern, durchgeführt. Ferner sind mehrere verschiedene Transportvorrichtungen, wie etwa der Roboterarm, der Greifer und Hebevorrichtungen erforderlich, um die Probenbehälter innerhalb des Probenverarbeitungssystems zu bewegen, insbesondere auf unterschiedliche Ebenen und in die verschiedenen Verarbeitungsstationen, wie Mischstation, Verschlussstation zu bringen. Insgesamt ergibt sich ein komplizierter und verschachtelter Aufbau mit vielen einzelnen Komponenten, die nur für einen speziellen Verarbeitungsschritt benötigt werden. Ferner besteht bei der Anordnung auf verschiedenen Ebenen auch die Gefahr, dass im Falle des Austritts von biologischem Material aufgrund eines defekten Probenbehälters oder eines Problems beim Öffnen/Schließen der Verschlüsse und dergleichen alle darunter liegenden Ebenen kontaminiert werden.

Aufgabe der Erfindung ist es, ein vereinfachtes Probenverarbeitungssystem und -verfahren bereitzustellen, bei dem Nachteile des bekannten Systems vermieden werden können.

Diese Aufgabe wird gelöst durch ein Probenverarbeitungssystem gemäß Anspruch 1 und ein Verarbeitungsverfahren gemäß Anspruch 14.

Die Steuereinrichtung der Probenverarbeitungsvorrichtung kann derart eingerichtet sein, dass eine in einem Probenbehälter enthaltene Probenflüssigkeit, insbesondere aus flüssigem biologischem Material oder aus einer Mischung von wenigstens einem Reagenz mit aufzulösendem oder gelöstem biologischen Material, mittels der Greifvorrichtung gemischt wird durch Drehung eines mittels der Greifer ergriffenen Probenbehälters um die Greiferdrehachse, vorzugsweise mit etwa 500 bis 2000 Umdrehungen pro Minute.

Die Greifvorrichtung wird also nicht nur zum Transportieren von Probenbehältern genutzt, wie dies beim bekannten Roboterarm der Fall ist, sondern zusätzlich zum Mischen der Probenflüssigkeit eingesetzt, ohne dass hierzu eine spezielle Mischvorrichtung im Probenverarbeitungssystem vorgesehen werden muss. Dies Vereinfacht den Aufbau des Probenverarbeitungssystems bzw. der Probenverarbeitungsvorrichtung, weil zusätzliche Komponenten eingespart werden können. Ferner können hierdurch bei der Probenverarbeitung Prozessschritte optimiert werden.

Gemäß der Erfindung wird vorgeschlagen, dass an der wenigstens einen Greifvorrichtung eine erste Sensoreinrichtung angebracht ist, die dazu eingerichtet ist, ein an einem Probenbehälter angebrachtes Identifikationsmuster, vorzugsweise Barcode, zu detektieren, wobei die Steuereinrichtung dazu eingerichtet ist, die Greifvorrichtung derart anzusteuern, dass ein ergriffener Probenbehälter in einer vorbestimmten Drehstellung relativ zu derjenigen Drehstellung, in welcher das Identifikationsmuster detektiert worden ist, in einen Probenbehälterträger abgesetzt wird, so dass mehrere mittels der Greifvorrichtung im Probenbehälterträger abgesetzte Probenbehälter bezogen auf ihr jeweiliges Identifikationsmuster im Wesentlichen gleich ausgerichtet werden bzw. sind.

Das Bereitstellen einer Sensoreinrichtung zum Detektieren eines am Probenbehälter angebrachten Identifikationsmusters ermöglicht eine weitere Optimierung von Prozessabläufen. Da die Sensoreinrichtung zusammen mit der Greifvorrichtung bewegt wird, ist es nicht erforderlich, dass zu verarbeitende Probenbehälter zu einer speziellen Position innerhalb der Probenverarbeitungsvorrichtung bewegt werden müssen, um das Identifikationsmuster einlesen zu können. Vielmehr kann eine solche Identifikation eines Probenbehälters bereits kurz nach dem Ergreifen des Probenbehälters und seiner Entnahme aus dem Probenbehälterträger erfolgen, während die Greifvorrichtung bereits zu einer Position bewegt wird, an welcher ein weiterer Verarbeitungsschritt für die Probe erfolgen wird. Als Identifikationsmuster wird an Barcodes in den verschiedenen bekannten Ausführungen gedacht, wie etwa eindimensionaler Strichcode, 2D-Barcode und dergleichen. Selbstverständlich können auch weitere Muster oder Zeichen als Identifikationsmuster verwendet werden oder einen Barcode ergänzen, wie etwa Ziffern, Buchstaben oder dergleichen.

Weiterbildend wird vorgeschlagen, dass die Probenverarbeitungsvorrichtung wenigstens eine Verschlussvorrichtung umfasst, die derart eingerichtet ist, dass ein in der Verschlussvorrichtung aufgenommener Probenbehälter von einem zugehörigen Verschlusselement, wie Deckel, Stopfen oder dergleichen, gelöst wird, um den Probenbehälter zu öffnen, oder mit einem solchen Verschlusselement verbunden wird, um den Probenbehälter zu verschließen. Bevorzugt ist die Verschlussvorrichtung so ausgeführt, dass sie das Lösen eines festsitzenden Verschlusselements, insbesondere eines Schraubverschlusselements bzw. Deckels und das Festziehen eines solchen Verschlusselements durchführen kann unter Aufbringung entsprechender Drehmomente.

In diesem Zusammenhang wird ferner daran gedacht, dass die Steuereinrichtung derart eingerichtet ist, dass offene oder verschlossene Probenbehälter mittels der Greifvorrichtung der Verschlussvorrichtung zuführbar und aus dieser entnehmbar sind.

Dabei kann die Greifvorrichtung derart eingerichtet sein, dass von den Probenbehältern gelöste gebrauchte oder gesonderte ungebrauchte Verschlusselemente greifbar sind und von der Verschlussvorrichtung weg oder zu dieser hin bewegt werden. Die Greifvorrichtung kann auch dafür eingesetzt werden, ein bereits gelöstes Verschlusselement endgültig vom betreffenden Probenbehälter zu entfernen, beispielsweise im Falle eines Schraubverschlusses durch Durchführen wenigstens eines Teils einer Umdrehung des Verschlusselements relativ zum Probenbehälter. Selbstverständlich kann die Greifvorrichtung auch im umgekehrten Fall beim Verschließen eines Probenbehälters ein Verschlusselement auf den Probenbehälter aufsetzen und dann beispielsweise mittels wenigstens eines Teils einer Umdrehung einen anfänglichen Eingriff zwischen Verschlusselement und Probenbehälter herstellen. Es ist dabei allerdings nicht vorgesehen, dass die Greifvorrichtung dazu dient, ein Verschlusselement unter Aufbringung eines hohen Drehmoments aus seiner festgeschraubten Stellung zu lösen oder in eine festgeschraubte Stellung anzuziehen.

Vorzugsweise ist die Probenverarbeitungsvorrichtung derart eingerichtet ist, dass die wenigstens eine Pipettiervorrichtung zu einem in der Verschlussvorrichtung befindlichen und geöffneten Probenbehälter beweglich ist, um Probenflüssigkeit aus dem betreffenden Probenbehälter entnehmen zu können.

Ferner wird vorgeschlagen, dass das Probenverarbeitungssystem wenigstens einen Verschlusselementträger umfasst, mittels welchem ungebrauchte Verschlusselemente auf der Aufnahmeplatte bereitgestellt werden können oder bereitgestellt sind.

Das Probenverarbeitungssystem kann ferner einen Abfallbehälter zur Entsorgung von gebrauchten Pipettierspitzen oder/und gebrauchten Verschlusselementen umfassen, wobei vorzugsweise der Abfallbehälter insbesondere hängend an einem in der zweiten Richtung verlaufenden dritten Rand der Aufnahmeplatte angeordnet ist. Als Abfallbehälter kommt beispielsweise ein sackartiger Behälter aus Kunststoff in Betracht, aber auch kistenartige Behälter mit festen Wänden sind denkbar.

Die Greifvorrichtung umfasst bevorzugt mehrere bewegliche Greifer, die derart eingerichtet sind, dass Probenbehälter oder Verschlusselemente mittels der Greifer von außen greifbar sind. In einer bevorzugten Ausführungsform sind vier Greifer vorgesehen, welche in Umfangsrichtung um jeweils 90° verteilt angeordnet sind. Denkbar sind allerdings auch weniger oder mehr als vier Greifer. Die Greifer sind vorzugsweise derart ausgeführt, dass mit ihnen unterschiedliche Arten von Probenbehälter bzw. zugehörige Verschlusselemente greifbar, drehbar und transportierbar sind. Die Greifer können somit unverändert für die Verarbeitung von verschiedenen Probenbehältern und ihren Verschlusselementen eingesetzt werden, wie etwa die bekannten Behälter PreserCyt^{®} Ampullen, SurePath^{™} Ampullen oder PCR Media tubes. Um dies zu ermöglichen ist natürlich die Steuervorrichtung derart eingerichtet, dass die Greifvorrichtung bzw. deren Greifer so angesteuert werden können, dass unterschiedliche Probenbehälter mittels der Greifer ergriffen werden können.

Das Probenverarbeitungssystem kann ferner eine Inkubatorvorrichtung umfassen, die an der Aufnahmeplatte angeordnet ist und in welcher mehrere Probenbehälter aufnehmbar sind. Die Inkubatorvorrichtung ermöglicht vorbereitende Schritte insbesondere für eine DNA-Analyse, beispielsweise um DNA-Stränge denaturieren zu können.

Vorzugsweise umfasst das Probenverarbeitungssystem eine der Aufnahmeplatte entlang der ersten Richtung (X) bewegliche Ladevorrichtung, wobei die Ladevorrichtung derart eingerichtet ist, dass sie Pipettierspitzenträger oder/und Verschlussträger oder/und Probenbehälterträger oder/und weitere für die Probenverarbeitung erforderliche Träger in der zweiten Richtung (Y) zur Aufnahmeplatte hin oder von dieser weg bewegt, wobei vorzugsweise die Ladevorrichtung entlang einem zweiten Rand der Aufnahmeplatte beweglich ist, welcher dem ersten Rand gegenüber liegt. Die Ladevorrichtung ermöglicht ein manuelles Bereitstellen von Trägern jeglicher Art außerhalb der Aufnahmeplatte und somit auch Außerhalb der Probenverarbeitungsvorrichtung und ein automatisiertes Ein- bzw. Ausfahren von Trägern mit Pipettierspitzen, Probenbehältern oder Verschlusselementen.

Die Ladevorrichtung umfasst eine zweite Sensoreinrichtung mittels welcher ein Identifikationsmuster, insbesondere Barcode eines Pipettenträgers oder/und eines Verschlussträgers oder/und eines Probebehälterträgers oder/und eines weiteren Trägers detektierbar ist, oder/und ein Identifikationsmuster, insbesondere Barcode von wenigstens einem in einem Probenbehälterträger aufgenommenen Probenbehälter detektierbar ist. Hierdurch wird ermöglicht, dass manuell bereitgestellte und bestückte Träger überprüft werden können und eine korrekte Bestückung der Probenverarbeitungsvorrichtung mittels der Steuereinrichtung überprüft werden kann. Ferner kann auch festgestellt werden welche Art Probenbehälterträger mit welchen Typen Problembehälter geladen worden sind, um beispielsweise die Ansteuerung der Greifvorrichtung entsprechend den Probenbehältertypen durchführen zu können.

Weiterbildend wird vorgeschlagen, dass die am ersten Arbeitsarm angebrachte Anzahl Pipettiervorrichtungen gleich der Anzahl Greifvorrichtungen am zweiten Arbeitsarm ist, wobei die Anzahl vorzugsweise eins bis vier ist. Sind mehrere Pipettiervorrichtungen bzw. Greifvorrichtungen vorhanden, können mehrere Probenbehälter gleichzeitig verarbeitet werden.

Bei einer beispielhaften Bestückung bzw. Konfiguration des Probenverarbeitungssystem ist es denkbar, dass auf der Aufnahmeplatte entlang der ersten Richtung (X) in Richtung vom ersten Arbeitsarm zum zweiten Arbeitsarm angeordnet sind:
ein Pipettierspitzenträger mit mehreren Pipettierspitzenrahmen, vorzugsweise fünf in der zweiten Richtung (Y) nebeneinander angeordneten Pipettierspitzenrahmen mit jeweils 96 Pipettierspitzen;
vorzugsweise ein Inkubator, insbesondere geeignet zur Aufnahme von 24 Probenbehältern eines bestimmten Typs;
vorzugsweise wenigstens ein Verschlusselementträger mit ungebrauchten Verschlusselementen für einen bestimmten Typ Probenbehälter;
vorzugsweise ein Behälter für ein Reagenz, insbesondere ein Lysis-Puffer;
wenigstens ein Probenbehälterträger für einen zweiten Typ Probenbehälter, vorzugsweise mehrere Probenbehälterträger für jeweils 24 Probenbehälter des zweiten Typs;
wenigstens ein Probenbehälterträger für einen ersten oder dritten Typ Probebehälter, vorzugsweise mehrere Probenbehälterträger für jeweils 12 Probenbehälter des ersten Typs oder für jeweils 6 Probenbehälter des dritten Typs;
ein Probenbehälterträger für Probenbehälter des ersten oder des dritten Typs;
ein Probenbehälterträger für Probenbehälter des zweiten Typs;
wenigstens eine Verschlussvorrichtung, eingerichtet für Probenbehälter des ersten und dritten Typs, vorzugsweise vier derartige Verschlussvorrichtungen in der zweiten Richtung (Y) nebeneinander.

Bei den Probenbehältern des ersten Typs kann es sich beispielsweise um SurePath^{™} Ampullen handeln. Als Probenbehälter des dritten Typs wird an PreservCyt^{®} Ampullen gedacht. Die PCR Media tubes kommen als Probenbehälter des zweiten Typs in Betracht. Diese Verteilung von konkreten Probenbehältern auf die beanspruchten Typen ist rein beispielhaft und es können auch Probenbehälter Verwendung finden, die unter anderen Bezeichnungen bzw. Handelsnamen bekannt sind.

Hierzu wird weiterbildend vorgeschlagen dass das Probenverarbeitungssystem wenigstens eine weitere Verschlussvorrichtung, eingerichtet für Probenbehälter des zweiten Typs, vorzugsweise vier derartige Verschlussvorrichtungen in der zweiten Richtung (Y) nebeneinander umfasst. Somit können im Probenverarbeitungssystem Probenbehälter von wenigstens zwei unterschiedlichen Typen mittels entsprechender Verschlussvorrichtungen geöffnet bzw. verschlossen werden. Im Zusammenspiel mit der Greifvorrichtung, welche alle Typen von Probenbehältern ergreifen, transportieren und drehen kann, ergibt sich ein flexibel einsetzbares und auch an unterschiedliche Verarbeitungsverfahren anpassbares Probenverarbeitungssystem.

Es wird ferner ein Verarbeitungsverfahren für biologische Proben, insbesondere Körperflüssigkeiten wie Blut, Speichel, Sekrete und dergleichen oder Gewebeproben vorgeschlagen, umfassend die Schritte:
Bereitstellen von wenigstens einem Probenbehälterträger mit wenigstens einem verschlossenen Probenbehälter, in dem eine biologische Probe, enthalten ist;
Bewegen des wenigstens einen Probenbehälterträgers auf eine Aufnahmeplatte einer Probenverarbeitungsvorrichtung;
wobei das Verfahren erfindungsgemäß folgende Schritte umfasst, die vorzugsweise wiederholt durchgeführt werden bis jeder Probenbehälter verarbeitet worden ist:
   Aufnehmen von dem bzw. einem Probenbehälter mittels einer Greifvorrichtung der Probenverarbeitungsvorrichtung;

Mischen der im Probenbehälter enthaltenen Probenflüssigkeit, insbesondere aus flüssigem biologischem Material oder aus einer Mischung von wenigstens einem Reagenz mit wenigstens teilweise gelöstem biologischen Material, durch Drehen des Probenbehälters mittels der Greifvorrichtung, vorzugsweise mit etwa 500 bis 2000 Umdrehungen pro Minute; und Absetzen des Probenbehälters an einer gewünschten Position in der Probenverarbeitungsvorrichtung mittels der Greifvorrichtung zur weiteren Verarbeitung.

Das Verarbeitungsverfahren umfasst vorzugsweise folgende weitere Schritte, die vorzugsweise wiederholt durchgeführt werden bis jeder Probenbehälter verarbeitet worden ist: Absetzen des Probenbehälters in einer Verschlussvorrichtung;

Lösen eines Verschlusselements des in der Verschlussvorrichtung aufgenommenen Probenbehälters mittels der Verschlussvorrichtung;

Entfernen des gelösten Verschlusselements vom Probenbehälter und aus der Verschlussvorrichtung mittels der Greifvorrichtung; und
vorzugsweise Drehen des Verschlusselements mittels der Greifvorrichtung nach dem Lösen durch die Verschlussvorrichtung und vor dem Entfernen des Verschlusselements, um einen nach dem Lösen gegebenenfalls noch wirkenden Eingriff zwischen Verschlusselement und Probenbehälter aufzuheben.

Weiterbildend wird vorgeschlagen, dass beim Verarbeitungsverfahren wenigstens ein Pipettierspitzenträger mit ungebrauchten Pipettierspitzen bereitgestellt wird und dass der wenigstens eine Pipettierspitzenträgers auf die Aufnahmeplatte der Probenverarbeitungsvorrichtung bewegt wird.

Weiterhin kann das Verarbeitungsverfahren umfassend folgende Schritte umfassen, die vorzugsweise wiederholt durchgeführt werden bis jeder Probenbehälter verarbeitet worden ist: Aufnehmen einer Pipettierspitze aus dem Pipettierspitzenträger mittels einer Pipettiervorrichtung;
Aspirieren einer gewünschten Menge der Probenflüssigkeit aus einem bestimmten Probenbehälter;
Dispensieren der in der Pipettierspitze aufgenommenen Probenflüssigkeit in einen anderen leeren Probenbehälter; und
Entsorgen der gebrauchten Pipettierspitze.

Bei diesen Verfahrensschritten kann es sich insbesondere um eine Aliquotierung handeln. Beim Vorgang der Aliquotierung kann eine zu analysierende Teilmenge (aliquoter Teil) von der im Probenbehälter enthaltenen Gesamtmenge eine Probe entnommen werden und in einen weiteren Probenbehälter gegeben werden, vorzugsweise mittels Pipettieren. Beim Vorgang der Aliquotierung kann aber auch nur eine Aufteilung einer Gesamtprobe in mehrere Proben sein, wobei nicht zwangsweise die entnommene Probe (Aliquot) diejenige ist, die analysiert wird, man kann auch von einer Art Portionierung sprechen.

Zusätzlich wird vorgeschlagen, dass das Verarbeitungsverfahren ferner folgende Schritte umfasst, die vorzugsweise wiederholt durchgeführt werden bis jeder Probenbehälter verarbeitet worden ist:
Wiederaufsetzen des zuvor entfernten gebrauchten Verschlusselements oder Aufsetzen eines ungebrauchten Verschlusselements auf den in der Verschlussvorrichtung befindlichen Probenbehälter mittels der Greifvorrichtung;
Verschließen des in der Verschlussvorrichtung befindlichen Probenbehälters mittels der Verschlussvorrichtung;
vorzugsweise Drehen des Verschlusselements mittels der Greifvorrichtung nach dem Aufsetzen durch die Greifvorrichtung und vor dem Verschließen des Verschlusselements, um nach dem Aufsetzen des Verschlusselements einen anfänglichen Eingriff zwischen Verschlusselement und Probenbehälter herzustellen;
Entfernen des wiederverschlossenen Probenbehälters aus der Verschlussvorrichtung mittels der Greifvorrichtung;
Absetzen des wiederverschlossenen Probenbehälters, insbesondere in Probenbehälterträger, vorzugsweise in demjenigen Probenbehälterträger, aus dem der Probenbehälter entnommen worden ist.

Beim Verarbeitungsverfahren kann der verschlossene Probenbehälter, welcher die biologischen Probe enthält, ein Probenbehälter eines ersten Typs sein, wobei das Verfahren ferner folgende Schritte umfassen kann: Bereitstellen von wenigstens einem unverschlossenen, vorzugsweise leeren Probenbehälter eines zweiten Typs in einem zugehörigen Probenbehälterträger, wobei an den Probenbehältern des ersten und des zweiten Typs ein Identifikationsmuster, vorzugsweise Barcode, angebracht ist und wobei immer zwei Probenbehälter des ersten und des zweiten Typs ein identisches Identifikationsmuster aufweisen.

Hierzu wird weiterbildend vorgeschlagen , dass beim Bewegen der Probenbehälterträger mit den Probenbehältern des ersten und des zweiten Typs die Identifikationsmuster an den einzelnen Probenbehältern und vorzugsweise an den Probenbehälterträgern detektiert und gespeichert werden und wobei verglichen wird, ob zu jedem Probenbehälter des ersten Typs ein Probenbehälter des zweiten Typs mit identischem Identifikationsmuster vorhanden ist.

Beim Absetzen des Probenbehälters in dem Probenbehälterträger kann das am Probenbehälter angebrachte Identifikationsmuster mittels einer Sensoreinrichtung an der Greifvorrichtung detektiert werden und der Probenbehälter kann in einer vorbestimmten Drehstellung relativ zu derjenigen Drehstellung, in welcher das Identifikationsmuster detektiert worden ist, in den Probenbehälterträger abgesetzt werden, so dass mehrere mittels der Greifvorrichtung im Probenbehälterträger abgesetzte Probenbehälter bezogen auf ihr jeweiliges Identifikationsmuster im Wesentlichen gleich ausgerichtet werden.

Beim Verarbeitungsverfahren kann der leere Probenbehälter, in den Probenflüssigkeit dispensiert wird, ein Probenbehälter des zweiten Typs sein.

Bevorzugt erfolgen beim Verarbeitungsverfahren die Bereitstellungsschritte außerhalb der Probenverarbeitungsvorrichtung an einer der Probenverarbeitungsvorrichtung vorgelagerten Bereitstellungsfläche.

Ferner kann das Verarbeitungsverfahren noch die Schritte umfassen: Automatisches Bewegen der Probenbehälterträger von der Aufnahmeplatte der Probenverarbeitungsvorrichtung zur Bereitstellungsfläche und manuelle Entnahme der Probenbehälterträger.

Zum Verarbeitungsverfahren wird ergänzend vorgeschlagen, dass ein Verschlusselementträger mit ungebrauchten Verschlusselementen für Probenbehälter bereitgestellt wird, insbesondere für Probenbehälter des zweiten Typs.

Dabei kann der Verschlusselementträger manuell auf der Aufnahmeplatte der Probenverarbeitungsvorrichtung positioniert werden.

Das Mischen der Probenflüssigkeit in einem Probenbehälter mittels der Greifvorrichtung erfolgt bevorzugt nach einem Transportieren des Probenbehälters in den Bereich eines Abfallbehälters.

Nachfolgend wird die Erfindung anhand einer Ausführungsform beispielhaft und nicht einschränkend beschrieben.
- Fig. 1: zeigt in einer schematisches Perspektivdarstellung eine Ausführungsform einer Probenverarbeitungsvorrichtung eines Probenverarbeitungssystems.
- Fig. 2: zeigt in einer schematischen Perspektivdarstellung eine mögliche Konfiguration des Probenverarbeitungssystems mit weiteren in der Probenverarbeitungsvorrichtung aufgenommenen Komponenten des Systems, wie etwa Probenbehälter und deren Träger sowie Pipettierspitzen und deren Träger.
- Fig. 3: zeigt in einer schematischen vergrößerten Perspektivdarstellung eine Ausführungsform einer Greifvorrichtung der Probenverarbeitungsvorrichtung.
- Fig. 4: zeigt in einer schematischen und vereinfachten Draufsicht eine Konfiguration des Probenverarbeitungssystems für ein Verarbeitungsverfahren zum Öffnen/Verschließen von Probenbehältern unterschiedlicher Typen.
- Fig. 5: zeigt in einer schematischen und vereinfachten Draufsicht eine andere Konfiguration des Probenverarbeitungssystems für ein Verarbeitungsverfahren zum Öffnen/Verschließen von Probenbehältern unterschiedlicher Typen..
- Fig. 6: zeigt in einer schematischen und vereinfachten Draufsicht eine Konfiguration des Probenverarbeitungssystems für ein Verarbeitungsverfahren zum Aliquotieren von Proben.
- Fig. 7: zeigt in einer schematischen und vereinfachten Draufsicht eine Konfiguration des Probenverarbeitungssystems für ein Verarbeitungsverfahren zum Aliquotieren und weiteren Verarbeiten von Proben.

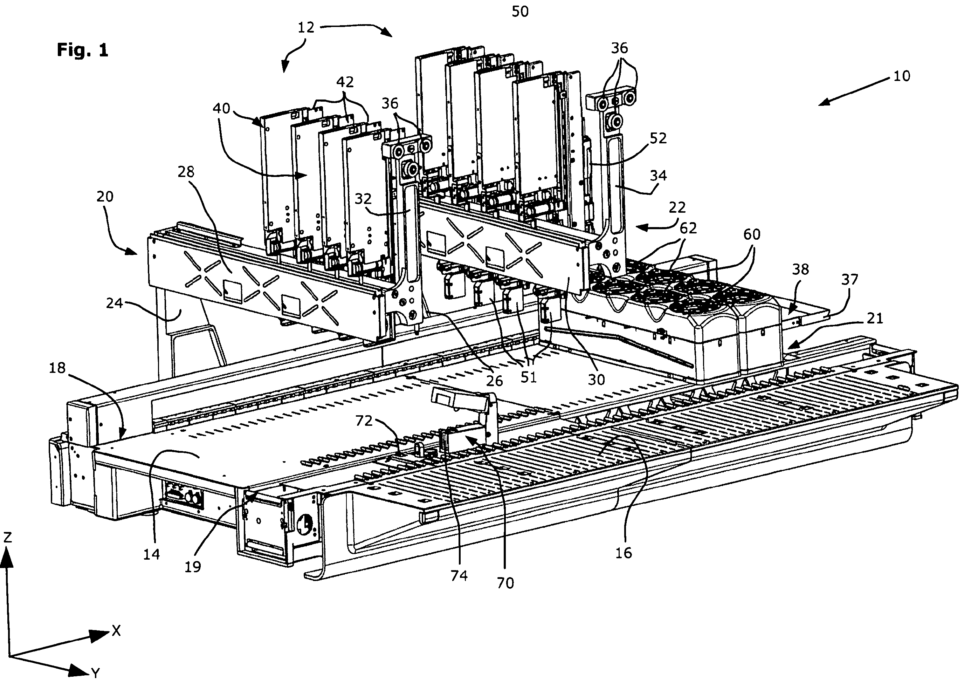

Fig. 1 zeigt in einer schematischen Perspektivdarstellung ein Probenverarbeitungssystem 10 mit einer Probenverarbeitungsvorrichtung 12. Die Probenverarbeitungsvorrichtung 12 umfasst eine Aufnahmeplatte 14, die über eine nicht dargestellte Grundkonstruktion auf einem Untergrund aufgestellt ist. Die Grundkonstruktion kann mit der Probenverarbeitungsvorrichtung 12 verbunden sein oder ein gesondertes Element sein, wie beispielsweise ein Tisch oder dergleichen. Die Aufnahmeplatte 14 bildet eine Ebene, welche sich in einer ersten Richtung X und einer zweiten Richtung Y erstreckt. Entlang einem ersten Rand 18 der Aufnahmeplatte sind zwei in X-Richtung bewegliche Arbeitsarme 20 und 22 angebracht. Diese beiden Arbeitsarme 20, 22 werden durch nicht dargestellte Antriebsvorrichtung angetrieben und sind gleitend bzw. rollend gelagert, so dass Sie relativ zur Aufnahmeplatte 14 bewegt werden können. Die Arbeitsarme 20, 22 weisen jeweils einen an der Aufnahmeplatte 14 abgestützten Vertikalträger 24 und 26 (teilweise verdeckt) und einen daran angebrachten Horizontalträger 28 und 30 auf. Die Horizontalträger weisen an dem Ende, das dem Vertikalträger 24, 26 entgegengesetzt ist, einen in einer dritten Richtung Z nach oben weisenden Rollenträger 32, 34 auf, der über Rollen 36 mit einer nicht dargestellten Führung in Eingriff steht. Die Führung ist Teil einer nicht dargestellten Rahmenkonstruktion der Probenverarbeitungsvorrichtung 12. Eine solche Rahmenkonstruktion ist oberhalb der Aufnahmeplatte 14 vorgesehen und kann auch ein hier nicht dargestelltes Gehäuse mit Wänden und Öffnungen umfassen.

Am ersten Arbeitsarm 20 sind entlang seines Horizontalträgers 28 mehrere Pipettiervorrichtungen 40 nebeneinander angeordnet. Alle Pipettiervorrichtungen 40 sind relativ zum Horizontalträger 28 in der Y-Richtung beweglich. Ferner weist jede Pipettiervorrichtung einen Pipettierkanal 42 auf, der zusätzlich in vertikaler Richtung Z beweglich ist. Jeder Pipettiervorrichtung kann mittels einer nicht dargestellten Steuereinrichtung, wie etwa Desktoprechner oder Notebook, auf welcher ein zugehöriges Steuerprogramm eingerichtet ist, angesteuert werden, um automatisiert Pipettiervorgänge durchführen zu können. Die hier im Beispiel dargestellten vier Pipettiervorrichtungen 40 - es könnten auch weniger oder mehr sein - sind einzeln ansteuerbar, um ihre möglichen bzw. gewünschten Positionen entlang des Horizontalträgers 28 zu erreichen, um einen zugehörigen Pipettierkanal 42 in Z-Richtung zu positionieren und um gewünschte Flüssigkeitsmengen aspirieren bzw. dispensieren zu können.

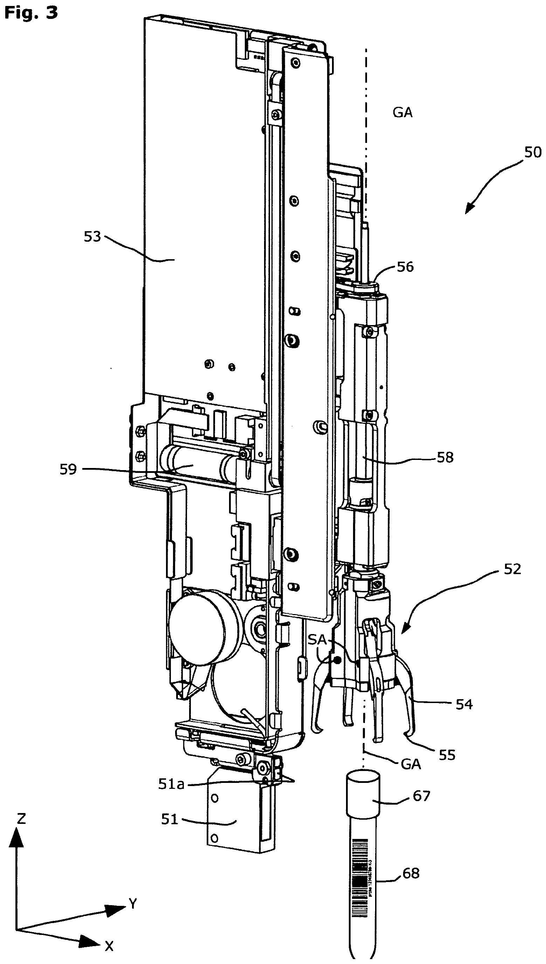

Am zweiten Arbeitsarm 22 sind entlang seines Horizontalträgers 30 mehrere Greifvorrichtungen 50 nebeneinander angeordnet. Alle Greifvorrichtungen 50 sind relativ zum Horizontalträger 30 in der Y-Richtung beweglich. Ferner weist jede Greifvorrichtung 50 ein in der Fig. 1 verdecktes Greifmittel 52 auf (siehe Fig. 3), das auch in vertikaler Richtung Z beweglich ist. Jede Greifvorrichtung 50 kann mittels einer nicht dargestellten Steuereinrichtung, wie etwa Desktoprechner oder Notebook, auf welcher ein zugehöriges Steuerprogramm eingerichtet ist, angesteuert werden, um automatisiert Greifvorgänge durchführen zu können. Die hier im Beispiel dargestellten vier Greifvorrichtungen 50 - es können auch weniger oder mehr sein - sind einzeln ansteuerbar, um ihre möglichen bzw. gewünschten Positionen entlang des Horizontalträgers 30 zu erreichen und um ein zugehöriges Greifmittel 52 in Z-Richtung zu positionieren.

Auf der Aufnahmeplatte 14 sind ferner an ihrem in der Fig. 1 rechten Rand Verschlussvorrichtungen 60 und 62 angeordnet. An einer bestimmten Position in X-Richtung befinden sich in Y-Richtung mehrere nebeneinander angeordnete Verschlussvorrichtungen 60 bzw. 62, wobei es sich im vorliegenden Beispiel um jeweils vier Verschlussvorrichtungen 60, 62 handelt. Diese Anzahl der angeordneten Verschlussvorrichtungen ist rein beispielhaft, es können auch mehr oder weniger Verschlussvorrichtungen 60, 62 vorgesehen sein. Die Verschlussvorrichtungen 60, 62 sind dazu eingerichtet, Verschlüsse, insbesondere Schraubverschlüsse von Probenbehältern zu lösen bzw. auf diesen festzuziehen. Dabei können die vier Verschlussvorrichtungen 60 beispielsweise für einen Typ Probenbehälter und deren Verschlusselemente (Deckel) eingerichtet sein, und die vier Verschlussvorrichtungen 62 können für einen anderen Typ Probenbehälter und deren Verschlusselemente (Deckel) vorgesehen sein. Die Anzahl der Verschlussvorrichtungen 60 bzw. 62 entspricht somit der Anzahl Pipettiervorrichtungen 40 bzw. der Anzahl Greifvorrichtungen 50 oder einem Vielfachen hiervon. Dies ermöglicht die in etwa synchrone Verarbeitung einer Anzahl von Probenbehältern, die der Anzahl von Pipettiervorrichtungen 40 bzw. Greifvorrichtungen 50 entspricht.

Der Aufnahmeplatte 14 ist in Y Richtung eine Ladefläche 16 vorgelagert, welche sich entlang einem zweiten Rand 19 der Aufnahmeplatte 14 erstreckt. Auf dieser Ladefläche können zu verarbeitende Materialien bereitgestellt werden. Mittels einer Ladevorrichtung 70 können auf entsprechenden Trägern angeordnete Materialien in Y-Richtung von der Ladefläche 16 auf die Aufnahmeplatte 14 bewegt werden oder von dieser wieder entfernt werden. Hierzu weist die Ladevorrichtung 70 einen Trägerantrieb 72 auf, der mittels einen Zahnrads in eine an einem Träger ausgebildete Zahnstange eingreifen kann (nicht dargestellt). Die Ladevorrichtung 70 ist im übrigen relativ zur Aufnahmeplatte 14 und zur Ladefläche 16 in X-Richtung beweglich und weist hierzu eine zugehörige nicht dargestellte Antriebseinrichtung auf. Ferner ist zu erkennen, dass an der Ladevorrichtung eine Sensoreinrichtung 74 angebracht ist, mittels welcher Identifikationsmuster, wie etwa Barcodes an den zu verwendenden Materialien detektiert, gelesen und an die nicht dargestellte Steuereinrichtung übertragen werden können. Die Steuereinrichtung ist auch dazu eingerichtet, die Bewegungen der Ladevorrichtung 70 und das Bewegen von Materialträgern mittels der Ladevorrichtung 70 anzusteuern.

Angedeutet ist am rechten Rand 21 der Aufnahmeplatte ferner ein Rahmen 37, der eine Öffnung 38 begrenzt. An diesem Rahmen 37 kann beispielsweise ein Sack aus Kunststoff als nicht dargestellter Abfallbehälter angebracht werden. Denkbar ist auch die Anordnung von einem steifen Abfallbehälter mit festen Wänden (beispielsweise eine Kiste). Je nach Konfiguration des Probenverarbeitungssystems kann der Abfallbehälter auch an einer für die Probenverarbeitungsprozesse geeigneten anderen Stelle der Aufnahmeplatte 14 bzw. der Probenverarbeitungsvorrichtung 12 angeordnet sein.

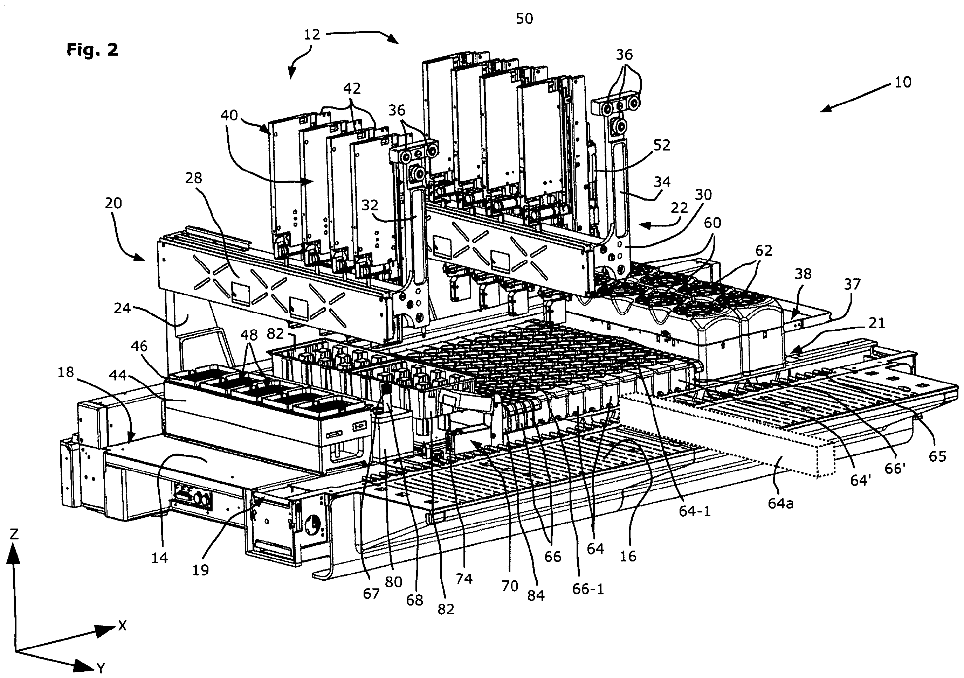

Fig. 2 zeigt eine der Fig. 1 ähnliche schematische Darstellung des Probenverarbeitungssystems 10, wobei auf Aufnahmeplatte 14 der Probenverarbeitungsvorrichtung 12 weitere Komponenten des Probenverarbeitungssystems 10 in einer beispielhaften Weise angeordnet sind. Bezogen auf die Fig. 2 ist ganz links ein Pipettierspitzenträger 44 angeordnet, in dem mehrere Pipettierspitzenrahmen 46 aufgenommen sind. In den jeweiligen Pipettierspitzenrahmen 46 sind mehrere Pipettierspitzen 48 vorzugsweise matrixartig angeordnet. Die Pipettierspitzen 48 können mit dem Pipettierkanal 42 einer betreffenden Pipettiervorrichtung 40 automatisch verbunden werden, um ein Pipettieren, also das Aspirieren und Dispensieren von Flüssigkeit durchführen zu können. Der hier dargestellte Pipettierspitzenträger 44 kann bis zu fünf Pipettierspitzenrahmen 46 aufnehmen. Ein Pipettierspitzenrahmen fasst im vorliegenden Beispiel sechsundneunzig (96) Pipettierspitzen 48 in einer 8x12 Matrixanordnung. Selbstverständlich können auch andere Pipettierspitzenrahmen mit einer anderen Anzahl an Pipettierspitzen in einem solchen Pipettierspitzenträger aufgenommen sein.

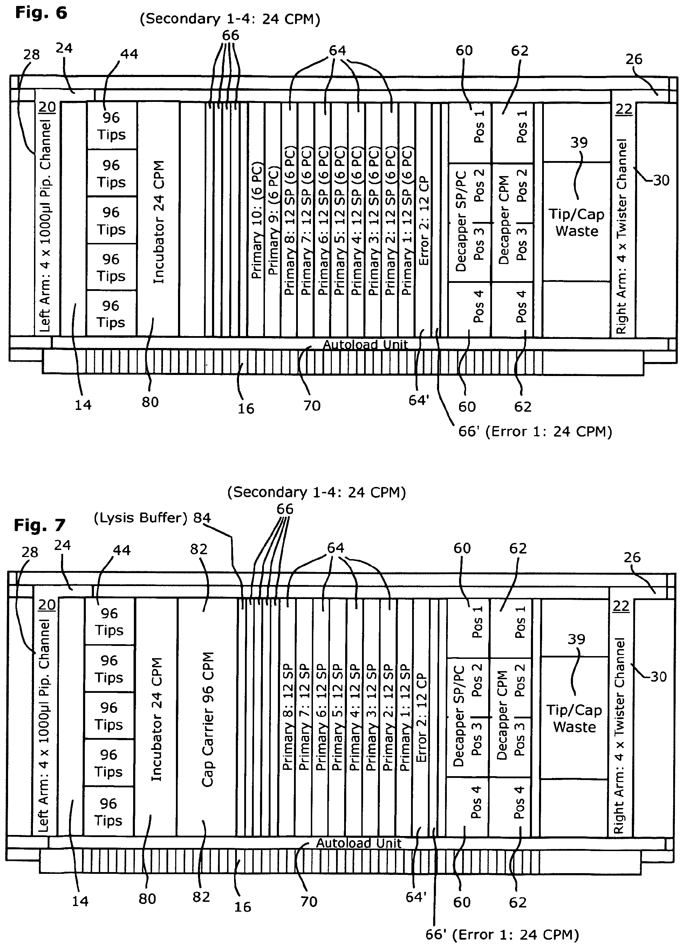

Links neben den Verschlussvorrichtungen 60 sind Probenbehälterträger 64 und 66 ersichtlich für jeweils mehrere in dieser Darstellung nicht gezeigte Probenbehälter. Ein vereinfachtes Beispiel eines Probenbehälters 68 ist in der Fig. 3 dargestellt. Als Probenbehälter kommen die üblichen bekannten Probenbehälter in Frage, wie etwa PreserCyt^{®} Ampullen, Sure-Path^{™} Ampullen oder PCR Media tubes. Das dargestellte Beispiel der Fig. 2 zeigt eine Konfiguration entsprechend der schematischen Anordnung in Fig. 7. Die Probenbehälterträger 64 sind hier für Probenbehälter 68 eines ersten Typs, wie etwa PreserCyt^{®} Ampullen oder SurePath^{™} Ampullen, eingerichtet. Die Probenbehälterträger 66 sind für Probenbehälter 68 eines zweiten Typs, wie etwa PCR Media tubes vorgesehen. Die Probenbehälter der verschiedenen Typen weisen unterschiedliche Dimensionen auf, was durch die unterschiedlich großen Aufnahmeöffnungen 64-1 und 66-1 für Probenbehälter in den Probenbehälterträgern 64, 66 illustriert ist.

Das Probenverarbeitungssystem 10 umfasst in der dargestellten Konfiguration ferner einen Inkubator 80, insbesondere eingerichtet für Probebehälter vom zweiten Typ. Im Inkubator 80 ist beispielhaft ein Probenbehälter 68 angedeutet der mittels eines Verschlusselements (Deckel, Stopfen) 67 verschlossen ist. Der Inkubator ist neben dem Pipettierspitzenträger 44 angeordnet. An den Inkubator 80 schließen sich Verschlusselementträger 82 für ungebrauchte Verschlusselemente, wie Schraubverschlüsse, an. Diese Verschlusselemente sind hier nicht dargestellt. Beispielhaft wird noch auf das in Fig. 3 dargestellte Verschlusselement 67 hingewiesen, das den Probenbehälter 68 verschließt. Die in den Verschlusselementträgern 82 aufgenommenen, insbesondere gestapelten Verschlusselemente (Deckel) können für jeweilige Probenbehälter unterschiedlicher Typen vorgesehen sein. Zwischen den Verschlusselementträgern 82 und dem ersten Probenbehälterträger 66 ist ferner noch ein Flüssigkeitsbehälter 84 angeordnet, in welchem ein Reagenz enthalten sein kann, wie etwa ein Lysis-Puffer oder dergleichen.

Fig. 3 zeigt in vergrößerter schematischer Perspektivdarstellung eine Greifvorrichtung 50 des Probenverarbeitungssystems 10 bzw. der Probenverarbeitungsvorrichtung 12. Wie bereits erwähnt weist die Greifvorrichtung 50 ein Greifmittel 52 auf. Dieses Greifmittel 52 umfasst im vorliegenden Beispiel vier einzelne Greifer bzw. Greifarme 54, die um eine jeweilige Schwenkachse SA verschwenkbar sind. Durch diese Verschwenkbarkeit können die Greifer 54, insbesondere deren Greifabschnitte 55 aufeinander zu und voneinander weg bewegt werden, um einen Probenbehälter 68 oder/und ein Verschlusselement 67 zu ergreifen bzw. loszulassen. Das Greifmittel 52 ist mit einem nicht sichtbaren Drehantrieb versehen, um das Greifmittel 52 und die Greifer 54 um eine Greiferdrehachse GA drehen zu können. Bei 56 ist eine Antriebsvorrichtung angedeutet, welche über mit dem Greifmittel verbundene Welle 58 das Verschwenken der Greifarme 54 bewirkt. Die gesamte Greifvorrichtung 50, insbesondere auch der nicht sichtbare Drehantrieb des Greifmittels 52 und die Antriebsvorrichtung 56, sind in Z-Richtung relativ zu einer feststehenden Greiferbasis 53 beweglich. Die Greiferbasis 53 ist beweglich in Y-Richtung am Horizontalträger 30 des zweiten Arbeitsarms 22 angebracht. Die Bewegung des Greifmittels 52 in Z-Richtung erfolgt mittels eines weiteren Antriebs 59. Es wird darauf hingewiesen, dass der Grundaufbau der Greifvorrichtung, insbesondere ihre Greiferbasis 53 eine ähnliche oder gleiche Struktur aufweisen kann, wie der Grundaufbau einer Pipettiervorrichtung 40.

Die Greifvorrichtung 50 ist mit der nicht dargestellten Steuereinrichtung des Probenverarbeitungssystems verbunden und wird von dieser angesteuert. Durch die Ansteuerung können Probenbehälter 68 oder Verschlusselemente 67 ergriffen und gehalten werden. Ferner ist die Steuereinrichtung dazu eingerichtet eine Drehung des Greifmittels 52 zu veranlassen, wobei ein ergriffener Probenbehälter 68 bzw. eine ergriffenes Verschlusselement 67 ebenfalls mitgedreht wird. Dies kann einerseits zum Ausrichten von Probenbehältern 68 genutzt werden und andererseits zum Mischen einer im Probenbehälter vorhandenen Probenflüssigkeit. Das Mischen von Probenflüssigkeit erfolgt dabei vorzugsweise bei etwa 500 bis 2000 Umdrehungen des Greifmittels 52 pro Minute.

Die Drehbarkeit des Greifmittels 52 ermöglicht ein Ausrichten eines ergriffenen Probenbehälters 68 derart, dass ein am Probenbehälter 68 angebrachtes Identifikationsmuster 90, wie etwa ein Barcode, mittels einer an der Greiferbasis 53 vorgesehenen Sensoreinrichtung 51 detektiert werden kann. Es ist somit möglich zu erfassen, welcher Probenbehälter 68 durch die Greifvorrichtung 50 verarbeitet wird. Ferner bietet sich hierdurch auch die Möglichkeit, einen ergriffenen Probenbehälter 68 in eine definierte Drehstellung zu bringen ausgehend von einer Stellung, in welcher der Barcode des Probenbehälters von der Sensoreinrichtung 51 detektiert werden kann. Nimmt man eines solche Stellung als Referenz, kann der Probenbehälter in eine gewünschte relative Drehstellung gebracht und in dieser gehalten werden, um den Probenbehälter 68 beispielsweise in dieser speziellen Drehstellung in seinen Probenbehälterträger 64, 66 abzusetzen. Des ermöglicht das im Wesentlichen identische Ausrichten aller in einem Probenbehälterträger 64, 66 enthaltenen Probenbehälter 68 derart, dass deren Barcodes alle in die gleiche Richtung weisen, vorzugsweise in eine Richtung, die zur Sensoreinrichtung 74 der Ladevorrichtung 70 (Fig. 1, 2) weist. Somit können die im Probenbehälterträger 64, 66 enthaltenen Probenbehälter 68 bzw. deren Barcodes 90 beim Bewegen des Probenbehälterträgers 64, 66 aus der Probenverarbeitungsvorrichtung 10 heraus erfasst werden. Die Probenbehälterträger 64, 66 weisen zu diesem Zweck entsprechende Aussparungen auf, welche die Sicht auf die Barcodes 90 bzw. die Probenbehälter 68 ermöglichen. Somit können die Probenbehälter 64, 66, die einzelnen Probenbehälter 68 bzw. an den Trägern bzw. Behältern vorhandene Barcodes 90 beim Laden der Träger/Behälter, beim Verarbeiten der Behälter und beim Entladen der Träger/Behälter lückenlos erfasst werden, so dass eine korrekte Verarbeitung sichergestellt werden kann.

Es ist im Übrigen auch möglich, dass beispielsweise ein Probenbehälter 68, dessen Barcode 90 beim Laden in die Probenverarbeitungsvorrichtung 12 nicht in Richtung der Sensoreinrichtung 74 der Ladevorrichtung 70 ausgerichtet ist, nach dem Laden des Probenbehälterträgers durch eine Greifvorrichtung 50 ergriffen wird und mittels der Sensoreinrichtung 51 nachträglich der Barcode 90 des bisher nicht erkannten Probenbehälters erfasst werden kann. Es somit möglich, dass Fehler in der anfänglichen Ausrichtung der Probenbehälter 68 in einem betreffenden Probenbehälterträger 64, 66 automatisiert korrigiert werden können.

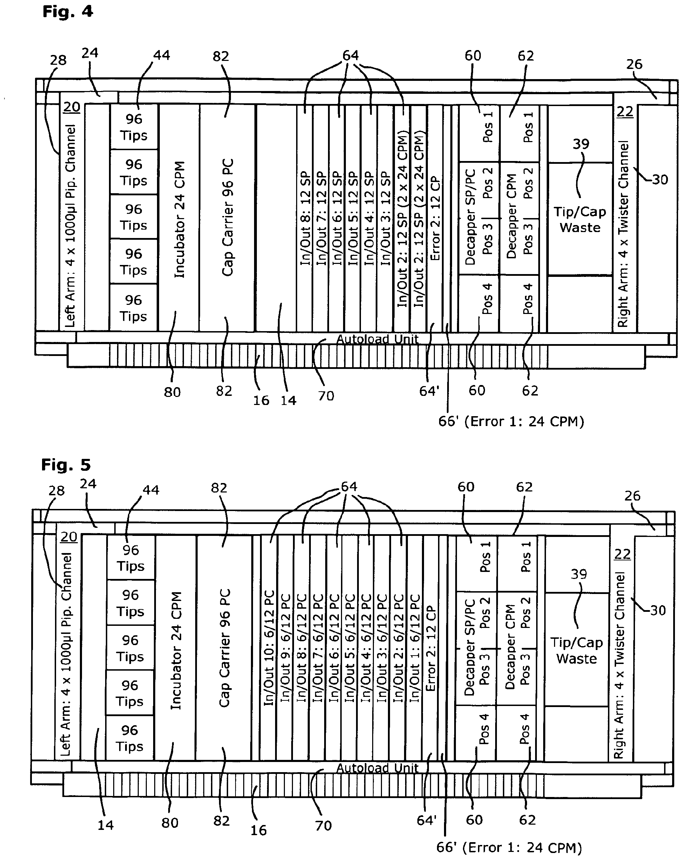

Unter Bezugnahme auf die Fig. 4 bis 7 werden nun mögliche Konfigurationen des Probenverarbeitungssystems 10 dargelegt und mittels dieser Konfigurationen durchführbare Verfahren. Zum Teil werden zu Erläuterungszwecken Bezugszeichen verwendet, die nur in den Fig. 1 bis 3 enthalten sind, weil die entsprechenden Komponenten in den Fig. 4 bis 7 nicht dargestellt sind.

Fig. 4 zeigt eine beispielhafte Konfiguration für ein automatisches Öffnen/Verschließen von von Probenbehältern mittels der Verschlussvorrichtungen 60, 62. In der dargestellten Konfiguration wird davon ausgegangen, dass bis zu 8 Probenbehälterträger 64 mit jeweils 12 Probenbehältern eines ersten Typs, wie beispielsweise vom Typ SurePathTM (SP) geöffnet oder verschlossen werden sollen. Anstelle von SP-Probenbehältern können auch Probenbehälter eines zweiten Typs, wie etwa PCR Media tubes (CPM) geladen sein, die geöffnet oder verschlossen werden sollen. Denkbar sind insbesondere beim Öffnen von verschlossenen Probenbehältern auch gemischte Anordnungen, beispielsweise 72 Probenbehälter des ersten Typs (SP) in 6 Probenbehälterträgern 64 und 96 Probenbehälter des zweiten Typs (CPM) in entsprechenden Probenbehälterträgern 66 mit jeweils 24 Probenbehältern.

Zunächst werden Probenbehälterträger 64, 66 mit verschlossenen Probenbehältern manuell an der Ladefläche 16 bereitgestellt. Dies ist vereinfacht und schematisch anhand eines gestrichelt dargestellten Probenbehälters 64a illustriert. In dieser Bereitstellungsanordnung stehen die verschiedenen Träger 44, 64, 66 für Probenbehälter, Pipettierspitzen etc. in Eingriff mit Halterungen 65, die entlang der Bereitstellungsfläche 16 in regelmäßigen Abständen angeordnet sind. Die einzelnen Probenbehälterträger 64, 66 werden anschließend mittels der Ladevorrichtung 70 in Y-Richtung von der Ladefläche 16 zur Aufnahmeplatte 14 hin bewegt. Dabei bewegt sich die Ladevorrichtung 70 nach jedem Laden eines Probenbehälterträgers etwas in X-Richtung, um den nächsten Probenbehälter laden zu können. Sobald alle zu verarbeitenden Probenbehälterträger 64, 66 geladen sind, kann das Öffnen der Probenbehälter beginnen. Hierzu werden der rechte (zweite) Arbeitsarm 22 und die daran angebrachten Greifvorrichtungen 50 angesteuert. Es werden von jeder Greifvorrichtung 50, hier beispielhaft vier Greifvorrichtungen, je ein Probenbehälter ergriffen und aus dem Probenbehälterträger 64, 66 entfernt (nach oben gehoben). Dabei kann der Barcode 90 am jeweiligen Probenbehälter 68 mittels der Sensoreinrichtung 51 an der Greifvorrichtung 50 gelesen werden. Die ergriffenen Probenbehälter werden anschließend in in Abhängigkeit ihres Typs in die Verschlussvorrichtungen 60, insbesondere für Probenbehälter des ersten Typs (SP), oder in die Verschlussvorrichtungen 62, insbesondere für Probenbehälter des zweiten Typs (CPM) abgesetzt. Die einzelnen Verschlussvorrichtungen 60, 62 lösen vom jeweils in ihnen aufgenommenen Probenbehälter das zugehörige Verschlusselement (vorzugsweise Schraubverschluss, -deckel). Sobald die Verschlusselemente nahezu vollständig gelöst sind, können sie von den jeweiligen Greifvorrichtungen ergriffen und gegebenenfalls noch vollständig abgeschraubt werden, beispielsweise durch wenigstens eine teilweise Umdrehung des Greifmittels 52 und den Greifern 54 um die Greiferdrehachse 54. Die ergriffenen Verschlusselemente können dann von den Probenbehältern entfernt werden und zu einem bei 39 flächig angedeuteten Abfallbehälter transportiert werden. Sobald die Greifvorrichtung oberhalb des Abfallbehälters 39 angelangt sind, können die Verschlusselemente losgelassen werden und fallen in den Abfallbehälter 39. Anschließend werden die Greifvorrichtung wieder zu den nun geöffneten Probenbehältern in den jeweiligen Verschlussvorrichtungen 60, 62 bewegt, um die offenen Probenbehälter zu ergreifen und aus den Verschlussvorrichtungen 60, 62 zu entfernen. Die geöffneten Probenbehälter werden danach wieder in einen Probenbehälterträger 64, 66 abgesetzt, vorzugsweise wird jeder offene Probenbehälter wieder an seine ursprüngliche Position transportiert, an welcher er im verschlossenen Zustand aus dem Probenbehälterträger entnommen worden ist. Beim Transportieren bzw. Absetzen der geöffneten Probenbehälter kann der an den Probenbehältern vorgesehene Barcode 90 mittels der Sensoreinrichtung 51 gelesen werden, um einerseits die korrekte Verarbeitung zu gewährleisten und um andererseits die Probenbehälter durch Bewegen in eine bestimmte Drehstellung in ausgerichteter Stellung im Probenbehälterträger absetzen zu können, d.h. alle Probenbehälter sind im Wesentlichen gleich ausgerichtet, so dass ihre jeweiligen Barcodes durch die Sensoreinrichtung 74 der Ladevorrichtung 70 erfasst werden können.

Beim Verfahren zum Verschließen von offenen Probenbehältern werden diese in Probenbehälterträgern 64, 66 an der Ladefläche 16 bereitgestellt und mittels der Ladevorrichtung 70 geladen. Anschließend werden offene Probenbehälter mittels der Greifvorrichtungen am zweiten Arbeitsarm ergriffen und in die Verschlussvorrichtungen 60, 62 gestellt. Danach werden die Greifvorrichtungen zum Verschlusselementträger 82 bewegt, auf welchem ungebrauchte Verschlusselemente für die zu verschließenden Probenbehälter vorhanden sind. Der oder die Verschlusselementträger sind zuvor in der Probenverarbeitungsvorrichtung, also auf der Aufnahmeplatte vorzugsweise manuell angeordnet worden. Die Greifvorrichtungen ergreifen jeweils ein ungebrauchtes Verschlusselement und transportieren dieses zu einem jeweiligen offenen Probenbehälter in den Verschlussvorrichtungen 60, 62. Mittels der Greifvorrichtung werden die Verschlusselemente auf die jeweiligen Probenbehälter aufgesetzt und vorzugsweise mittels wenigstens einer teilweisen Umdrehung locker auf den Probenbehälter geschraubt, um einen ersten Eingriff zwischen Verschlusselement und Probenbehälter zu ermöglichen. Anschließend werden die Verschlusselemente von den Greifvorrichtungen losgelassen, so dass die Verschlussvorrichtungen die Probenbehälter fest mit den Verschlusselementen verschließen können. Die danach verschlossenen Probenbehälter werden mittels der Greifvorrichtungen aus den Verschlussvorrichtungen 60, 62 entnommen und wieder in einen Probenbehälterträger transportiert. Vorzugsweise wird jeder verschlossene Probenbehälter wieder an seine ursprüngliche Position transportiert, an welcher er im offenen Zustand aus dem Probenbehälterträger 64, 66 entnommen worden ist. Beim Transportieren bzw. Absetzen der geöffneten Probenbehälter kann der an den Probenbehältern vorgesehene Barcode mittels der Sensoreinrichtung 51 gelesen werden, um einerseits die korrekte Verarbeitung zu gewährleisten und um andererseits die Probenbehälter in ausgerichteter Stellung im Probenbehälterträger absetzen zu können, d.h. alle Probenbehälter sind im Wesentlichen gleich ausgerichtet, so dass ihre jeweiligen Barcodes durch die Sensoreinrichtung 74 der Ladevorrichtung 70 erfasst werden können.

Nach dem Öffnen oder Verschließen aller geladenen Probenbehälter, werden die Probenbehälterträger 64, 66 mit den vollständig verarbeiteten Probenbehältern (geöffnet oder verschlossen) mittels der Ladevorrichtung 70 von der Aufnahmeplatte weg zur Ladefläche 16 bewegt (in Y-Richtung), wo sie vorzugsweise manuell entnommen und weiteren Verarbeitungsschritten ggf. in benachbarten weiteren Probenverarbeitungsvorrichtungen zugeführt werden können. Es ergibt sich selbstverständlich, dass die oben beschriebenen Schritte mittels denen die Probenbehälter geöffnet oder verschlossen werden können, wiederholt durchgeführt werden, da pro Zyklus im vorliegenden Beispiel vier Probenbehälter quasi synchron verarbeitet werden können. Sind beispielsweise 96 Probenbehälter zu verarbeiten, müssen somit 24 Zyklen ä 4 Probenbehälter durchgeführt werden, bis alle Probenbehälter vom geöffneten in den verschlossenen Zustand überführt worden sind (oder umgekehrt). Zu diesen mittels des zweiten Arbeitsarms bzw. der Greifvorrichtungen und der Verschlussvorrichtungen durchgeführten wiederholten Schritte sind die Verfahrensschritte des Ladens und Entladens von Probenbehälterträgern 64, 66 mittels der Ladevorrichtung nicht einzuschließen, auch wenn die Ladevorrichtung natürlich mehrere Lade-/Entladevorgänge nacheinander durchführen kann bzw. durchführt.

Fig. 5 zeigt eine zur Fig. 4 ähnliche Konfiguration zum Öffnen/Verschließen von Probenbehältern. Hier wird allerdings beispielhaft von Probenbehältern eines dritten Typs ausgegangen, von denen in einem Probenbehälterträger 64 nur je sechs Stück Platz haben. Für die Probenbehälter vom ersten Typ (SP) und vom dritten Typ (PC) können vorzugsweise die gleichen Probenbehälterträger 64 verwendet werden. Allerdings können anstelle von 12 Probenbehältern des ersten Typs (SP) nur jeweils sechs Probenbehälter des dritten Typs (PC) aufgenommen werden, d.h. zwischen zwei benachbarten Probenbehältern des dritten Typs (PC) ist ein freier Platz. Mit der dargestellten Konfiguration ist es möglich bis zu 60 Probenbehälter des dritten Typs (PC) zu öffnen oder mit ungebrauchten zu diesem Typ Probenbehälter passenden Verschlusselementen zu verschließen. Das Vorgehen ist dabei das gleiche wie oben unter Bezugnahme auf die Fig. 4 für die dortigen Probenbehälter vom ersten und zweiten Typ beschriebene.

Für Verarbeitungsverfahren, bei denen mittels des Probenverarbeitungssystem nur ein Öffnen oder Verschließen von Probenbehälter erfolgen soll, werden in der Regel keine Pipettierspitzen gebraucht und auch der optionale Inkubator wird nicht verwendet. In der Regel wird auch der erste Arbeitsarm 20, in den Fig. 4 und 5 links in seiner Parkposition dargestellt, mit den daran vorgesehenen Pipettiervorrichtungen nicht benötigt.

In diesem Zusammenhang ist es denkbar, auch am ersten Arbeitsarm Greifvorrichtungen anstelle der Pipettiervorrichtungen vorzusehen. Hierdurch würde eine Verarbeitungsvorrichtung bereitgestellt, die mittels zweier Arbeitsarme und daran angebrachten Greifvorrichtungen das Öffnen/Verschließen von Probenbehältern schneller durchführen könnte, da die auszuführenden Verfahrensschritte nicht nur von einem Arbeitsarm mit Greifvorrichtungen durchgeführt werden müssen, sondern auf beide Arbeitsarme optimiert verteilt werden könnten.

Fig. 6 zeigt eine Konfiguration des Probenverarbeitungssystems zum Durchführen eines Verfahrens zum Aliquotieren von Proben, die in den Probenbehältern enthalten sind. Es werden mehrere Probenbehälterträger 64 mit Probenbehältern eines ersten Typs (SP) oder eines dritten Typs (PC) bereitgestellt an der Ladefläche 16. Ferner werden mehrere Probenbehälterträger 66 für Probenbehälter eines zweiten Typs (CPM) in gleicher Weise bereitgestellt. Schließlich wird auch ein Pipettierspitzenträger 44 mit mehreren Pipettierspitzenrahmen 46 und darin befindlichen ungebrauchten Pipettierspitzen 48 bereitgestellt. Die verschiedenen Träger 44, 64, 66 für Probenbehälter und Pipettierspitzen werden mittels der Ladevorrichtung 70 in Richtung der Aufnahmeplatte 14 bewegt, so dass danach die Probenverarbeitungsvorrichtung mit den Trägern 44, 64, 66 bestückt ist. Wie bereits oben beschrieben, können die Träger und die Probenbehälter bzw. deren Barcodes mittels der Sensoreinrichtung 74 der Ladevorrichtung 70 erfasst werden, so dass die Position jedes Probenbehälters eindeutig identifizierbar ist, insbesondere unter Berücksichtigung in welchem Probenbehälterträger er untergebracht ist und an welcher Position der Aufnahmeplatte der Probenbehälterträger geladen worden ist.

In der Regel enthalten die Probenbehälter des ersten (SP) oder des dritten (PC) Typs die gesamte Probe, aus welcher ein Aliquot entnommen werden soll. Diese Probenbehälter sind in der Regel verschlossen.

Beim Verfahren werden nun mittels der Greifvorrichtungen 50 am zweiten Arbeitsarm 22 mehrere, vorzugsweise vier Probenbehälter des ersten Typs ergriffen und in Richtung des Abfallbehälters 39 bewegt. Wenn die Greifvorrichtung mit den Probenbehältern dort angekommen sind, werden die Probenbehälter mittels des Greifmittels um die Greiferdrehachse GA in Rotation versetzt, vorzugsweise mit etwa 500 bis 2000 Umdrehungen pro Minute, so dass die Proben im jeweiligen Probenbehälter gut durchmischt werden kann. Nach dem Mischen werden die Probenbehälter in eine jeweilige Verschlussvorrichtung 60 für diesen Typ Probenbehälter transportiert. Nach dem Absetzen und Loslassen der verschlossenen Probenbehälter werden deren Verschlusselemente (vorzugsweise Schraubdeckel) mittels der Verschlussvorrichtung 60 gelöst. Die gelösten Verschlusselemente werden von den Greifvorrichtungen ergriffen und von den Probenbehältern entfernt, wobei die Greifvorrichtungen gegebenenfalls noch eine (Teil-)Umdrehung durchführen, um den bereits gelösten Eingriff zwischen Verschlusselement und Probenbehälter aufzuheben. Anschließend werden die Greifvorrichtungen in Richtung des Abfallbehälters 39 bewegt. Dort werden die ergriffenen Verschlusselemente entweder entsorgt oder sie verbleiben in der jeweiligen Greifvorrichtung, um später wieder auf den Probenbehälter gesetzt zu werden.

Mittels des ersten Arbeitsarms 20 und der daran angebrachten Pipettiervorrichtungen 40 werden Pipettierspitzen (Tips) aus dem zugehörigen Pipettierspitzenträger 44 entnommen. Die Pipettierspitzen werden dabei mit den Pipettierkanälen der Pipettiervorrichtungen automatisch gekoppelt. Der erste Arbeitsarm wird dann in Richtung (X) der Verschlussvorrichtungen bewegt. Jede Pipettiervorrichtung wird oberhalb eines in einer jeweiligen Verschlussvorrichtung aufgenommenen Probenbehälters angeordnet. Anschließend werden die Pipettierspitzen in den betreffenden Probenbehälter abgesenkt um eine bestimmte Menge, wie etwa 500 oder 1000µl, der Probe zu entnehmen (aspirieren). Nach dem Aspirieren werden die Pipettiervorrichtungen mit den Probenflüssigkeit enthaltenden Pipettierspitzen zu jeweiligen Probenbehältern des zweiten Typs (CPM) bewegt, so dass eine aspirierte Probe in einen solchen bisher leeren Probenbehälter abgegeben (dispensiert) werden kann. Nach dem Dispensieren wird der erste Arbeitsarm 20 in Richtung Abfallbehälter 39 bewegt, wo die gebrauchten Pipettierspitzen abgeworfen und entsorgt werden. Danach wird der erste Arbeitsarm wieder in Richtung der Pipettierspitzenträger 44 verfahren.

Der zweite Arbeitsarm 22 kann nun aus seiner Stellung im Bereich des Abfallbehälters 39 bzw. seiner Parkposition am rechten Rand, wie in Fig. 6 dargestellt, wieder zu den Verschlussvorrichtungen 60 bewegt werden, um die bis dahin gehaltenen Verschlusselemente wieder auf die Probenbehälter in den Verschlussvorrichtungen aufsetzten zu können. Alternativ zum Wiederverwenden von diesen Verschlusselementen ist es auch denkbar, dass diese entsorgt werden (in den Abfallbehälter 39) und ungebrauchte Verschlusselemente mittels der Greifvorrichtungen geholt werden, beispielsweise von einer in Fig. 6 noch leer gelassenen Position zwischen Inkubator 80 und Probenbehälterträger 66 für die Probenbehälter des zweiten Typs (CPM). Beim Aufsetzen der gebrauchten oder neuen Verschlusselemente können die Greifvorrichtungen einen ersten relativ losen Eingriff zwischen Verschlusselement und Probenbehälter herstellen, vorzugsweise durch eine (Teil-)Umdrehung des Verschlusselements relativ zum feststehenden Probenbehälter. Danach werden die Verschlusselemente von den Greifvorrichtungen losgelassen, und die Verschlussvorrichtungen führen das eigentliche Verschließen der Probenbehälter mittels Festziehen der Verschlusselemente durch. In der Folge können die (wieder-)verschlossenen Probenbehälter durch die Greifvorrichtungen ergriffen und zurück an ihre Position im Probenträgerbehälter transportiert und dort abgesetzt werden. Wie bereits oben unter Bezugnahme auf die Fig. 4 und 5 beschrieben, können die Probenbehälter beim Zurückstellen in die Probenbehälterträger ausgerichtet werden unter Verwendung der Sensoreinrichtung 51 an der Greifvorrichtung 50. Bei diesem Ausrichtvorgang kann in den hier vorgestellten Konfigurationen davon ausgegangen werden, dass ein Probenbehälter, dessen Barcode von der Sensoreinrichtung 51 erkannt wird, etwa 160° bis 220° um die Greiferdrehachse GA gedreht werden muss, um den Barcode des Probenbehälters in Richtung der Sensoreinrichtung 74 der Ladevorrichtung auszurichten. Natürlich sind je nach Anordnung der beiden Sensoreinrichtungen 51 bzw. 74 auch andere Drehwinkel möglich bzw. erforderlich.

Nachdem von jeder Probe in einem Probenbehälter des ersten (SP) oder des dritten (PC) Typs eine Probe in oben beschriebener Art und Weise entnommen worden ist und ein Aliquot in einem entsprechenden Probenbehälter des zweiten Typs enthalten ist, können die verschiedenen Probenbehälterträger 64, 66 und der Pipettierspitzenträger 44 mittels der Ladevorrichtung 70 wieder von der Aufnahmeplatte entfernt werden, so dass sie an der Ladefläche wieder entnommen werden können. Insbesondere die nicht verschlossenen Probenbehälter des zweiten Typs (CPM) mit dem Aliquot werden bevorzugt weiteren Verarbeitungschritten zugeführt, insbesondere in einer benachbarten weiteren Verarbeitungsvorrichtung zur Analyse der biologischen Probe. Beim hier beschriebenen Verfahren zum Aliquotieren von Proben wird der Inkubator 80 nicht verwendet.

Fig. 7 zeigt eine letzte Konfiguration, bei welcher zusätzlich zur Konfiguration gemäß Fig. 6 noch ein Behälter 84 mit Reagenz, insbesondere einem Lysis-Puffer, vorgesehen ist zwischen dem Verschlusselementträger 82 (hier für ungebrauchte Verschlusselemente für Probenbehälter des zweiten Typs) und Probenbehälterträger 66 für Probenbehälter des zweiten Typs (CPM). Das Reagenz, vorzugsweise der Lysis-Puffer kann mittels der Pipettiervorrichtungen den Probenbehältern des ersten (SP) oder des zweiten (CPM) Typs zugegeben werden, so dass eine Mischung aus biologischer Probe und Reagenz hergestellt werden kann, vorzugsweise in den Probenbehältern vom zweiten Typ. Die Probenbehälter des zweiten Typs, welche ein Probenaliquot mit Reagenz enthalten, können verschlossen werden analog dem oben beschriebenen Verfahren. Bevorzugt werden die verschlossenen Behälter dann in den Inkubator 80 gestellt, um bestimmte chemische Reaktionen im Gemisch aus Probe und Reagenz hervorzurufen. Nach der gewünschten Inkubationszeit können die Probenbehälter des zweiten Typs wieder an ihre angestammte Position im entsprechenden Probenbehälterträger 66 transportiert werden, wobei davor gegebenenfalls die Verschlusselemente wieder entfernt werden. Am Ende können geschlossene oder geöffnete Probenbehälter des zweiten Typs mit einem Gemisch aus Probe und Reagenz entladen werden, die weiteren Verarbeitungsschritten gegebenenfalls in einer weiteren Verarbeitungsvorrichtung unterzogen werden können.

In allen Konfigurationen ist noch auf die Probenbehälterträger 64' und 66' hinzuweisen, die sich bezogen auf die Figuren links an die Verschlussvorrichtungen 60, 62 anschließen. Diese Probenbehälterträger 64' und 66' sind zu Beginn der verschiedenen Verfahren leer und werden nur mit Probenbehältern des entsprechenden Typs befüllt, wenn beim Verarbeiten ein Problem mit einem Probenbehälter bzw. der darin enthaltenen Probe auftritt. Solche Probleme können beispielsweise sein: Barcode nicht erkennbar, Fehler beim Pipettieren festgestellt oder ähnliches.

Für die vorgestellten Verfahren, welche mit Konfigurationen gemäß Fig. 6 oder Fig. 7 durchgeführt werden, gibt es für jeden Probenbehälter des ersten oder dritten Typs einen Probenbehälter des zweiten Typs mit identischem Barcode, so dass identische Proben auch in identisch gekennzeichneten Probenbehältern enthalten sind. Durch die Verwendung von zwei gesonderten Sensoreinrichtungen 51, 74 zum Lesen der Barcodes beim Laden/Entladen der Probenbehälterträger und beim Verarbeiten (Greifen, Mischen, Transportieren) der einzelnen Proben kann in optimierte Weise erfasst werden, welche Probenbehälter geladen worden sind, welche Probenbehälter welchen Verarbeitungsschritten unterzogen worden sind und welche Probenbehälter wieder entladen worden sind. Es wird natürlich auch erfasst, welche Probenbehälter gegebenenfalls als fehlerhaft gekennzeichnet worden sind und sich in einem der Probenbehälterträger 64' oder 66' befinden.

Allen Konfigurationen bzw. Verfahren ist gemeinsam, dass die Greifvorrichtung 50 nicht nur zum bloßen Ergreifen und Transportieren von Probenbehältern genutzt wird, sondern dass die Greifvorrichtung(en) auch zum Detektieren von Barcodes eingerichtet ist und zum Ausrichten von Probenbehältern auf Grundlage der Position, in welcher der Barcode gelesen worden ist. Ferner kann die Greifvorrichtung gemäß den beispielhaften Konfigurationen der Fig. 6 und 7 als Mischer genutzt werden, ohne dass Probenbehälter in eine spezielle Mischvorrichtung transportiert und dort abgesetzt werden müssen. Insgesamt ergeben sich durch das vorgeschlagene Probenverarbeitungssystem mit einer oder mehreren beschriebenen Greifvorrichtung(en) optimierte Verfahrensabläufe.

Die oben beschriebenen Verfahrensschritte werden mittels einer entsprechend programmierten nicht dargestellte Steuereinrichtung (Computer) des Probenverarbeitungssystems durchgeführt, welche mit den verschiedenen Komponenten, wie Sensoreinrichtungen, Ladevorrichtung, Arbeitsarmen, Pipettier- und Greifvorrichtungen, sowie deren Antriebe verbunden ist, so dass eine entsprechende Ansteuerung bzw. Regelung der verschiedenen Komponenten ermöglicht ist. Auf Details der Steuerung/Regelung wird hier aber nicht weiter eingegangen. Auch wenn hier nicht jede Komponente genannt ist, welche durch die Steuereinrichtung angesteuert werden könnte, so kann doch davon ausgegangen werden, dass alle Komponenten, die in irgendeiner Weise aktiv an durchzuführenden Verfahrensschritten beteiligt sind, mit der Steuereinrichtung verbunden sind.

## Patentansprüche

1. Probenverarbeitungssystem zum Verarbeiten von biologischen Proben, insbesondere Körperflüssigkeiten wie Blut, Speichel, Sekrete und dergleichen oder Gewebeproben, insbesondere zur Vorbereitung von Proben für eine DNA-Analyse mittels PCR, umfassend
eine Probenverarbeitungsvorrichtung (12)
mit einer Aufnahmeplatte (14), wobei die Aufnahmeplatte (14) in einer durch eine erste und eine zweite Richtung (X, Y) definierten Ebene im Wesentlichen horizontal angeordnet ist;
mit einem ersten und einem zweiten Arbeitsarm (20, 22), wobei der erste und der zweite Arbeitsarm (20, 22) relativ zur Aufnahmeplatte (14), vorzugsweise entlang einem ersten Rand (18) der Aufnahmeplatte (14), in der ersten Richtung (X) beweglich sind, und wobei sich der erste und der zweite Arbeitsarm (20, 22) im Wesentlichen parallel zueinander in der zweiten Richtung (Y) über die Aufnahmeplatte (14) erstrecken, wobei an dem ersten Arbeitsarm (20) wenigstens eine in der zweiten Richtung (Y) und in einer zur ersten und zweiten Richtung (X, Y) orthogonalen dritten Richtung (Z) bewegliche Pipettiervorrichtung (40, 42) angebracht ist und wobei an dem zweiten Arbeitsarm (22) wenigstens eine in der zweiten Richtung (Y) und in einer zur ersten und zweiten Richtung (X, Y) orthogonalen dritten Richtung (Z) bewegliche Greifvorrichtung (50) angebracht ist, wobei an der Greifvorrichtung (50) vorgesehene Greifer (54) um eine zur dritten Richtung (Z) parallele Greiferdrehachse (GA) drehbar sind; und
mit einer Steuereinrichtung zur Ansteuerung der Pipettiervorrichtung (40, 42) und der Greifvorrichtung (50);
mehrere mit Proben, insbesondere flüssigen Proben befüllte oder mit Proben oder Reagenzien befüllbare Probenbehälter (68),
mehrere mittels der Pipettiervorrichtung (40, 42) verwendbare Pipettierspitzen (48) zum Aspirieren und Dispensieren von Probenflüssigkeit oder weiteren für die Probenverarbeitung erforderlichen Reagenzien, wie etwa ein Lysis-Puffer, wobei die Probenbehälter (68) und die Pipettierspitzen (48) mittels zugehöriger Probenbehälterträger (64, 66) bzw. Pipettierspitzenträger (44) auf der Aufnahmeplatte (14) angeordnet sind,
wobei an der wenigstens einen Greifvorrichtung (50) eine erste Sensoreinrichtung (51) angebracht ist, die dazu eingerichtet ist, ein an einem Probenbehälter (68) angebrachtes Identifikationsmuster (90), vorzugsweise Barcode, zu detektieren,
**dadurch gekennzeichnet, dass** die Steuereinrichtung dazu eingerichtet ist, die Greifvorrichtung (50) derart anzusteuern, dass ein ergriffener Probenbehälter (68) in einer vorbestimmten Drehstellung relativ zu derjenigen Drehstellung, in welcher das Identifikationsmuster (90) detektiert worden ist, in einen Probenbehälterträger (64, 66) abgesetzt wird, so dass mehrere mittels der Greifvorrichtung (50) im Probenbehälterträger (64, 66) abgesetzte Probenbehälter (68) bezogen auf ihr jeweiliges Identifikationsmuster (90) im Wesentlichen gleich ausgerichtet werden bzw. sind,
wobei das Probenverarbeitungssystem eine der Aufnahmeplatte (14) entlang der ersten Richtung (X) bewegliche Ladevorrichtung (70) umfasst, wobei die Ladevorrichtung (70) derart eingerichtet ist, dass sie Pipettierspitzenträger (44) oder/und Verschlussträger (82) oder/und Probenbehälterträger (64, 66) oder/und weitere für die Probenverarbeitung erforderliche Träger (84) in der zweiten Richtung (Y) zur Aufnahmeplatte (14) hin oder von dieser weg bewegt, wobei vorzugsweise die Ladevorrichtung (70) entlang einem zweiten Rand (19) der Aufnahmeplatte beweglich ist, welcher dem ersten Rand (18) gegenüber liegt, und
wobei die Ladevorrichtung (70) eine zweite Sensoreinrichtung (74) umfasst mittels welcher das Identifikationsmuster (90), insbesondere der Barcode von wenigstens einem in einem Probenbehälterträger (64, 66) aufgenommenen Probenbehälter (68) detektierbar ist.

2. Probenverarbeitungssystem nach Anspruch 1, **dadurch gekennzeichnet, dass** ein Identifikationsmuster, insbesondere ein Barcode eines Pipettierspitzenträgers (44) oder/und eines Verschlussträgers (82) oder/und eines Probenbehälterträgers (64, 66) oder/und eines weiteren Trägers (84) detektierbar ist.

3. Probenverarbeitungssystem nach Anspruch 1 oder 2, **dadurch gekennzeichnet, dass** die Probenverarbeitungsvorrichtung wenigstens eine Verschlussvorrichtung (60, 62) umfasst, die derart eingerichtet ist, dass ein in der Verschlussvorrichtung (60, 62) aufgenommener Probenbehälter (68) von einem zugehörigen Verschlusselement (67), wie Deckel, Stopfen oder dergleichen, gelöst wird, um den Probenbehälter (68) zu öffnen, oder mit einem solchen Verschlusselement (67) verbunden wird, um den Probenbehälter (68) zu verschließen.

4. Probenverarbeitungssystem nach Anspruch 3, **dadurch gekennzeichnet, dass** die Steuereinrichtung derart eingerichtet ist, dass offene oder verschlossene Probenbehälter (68) mittels der Greifvorrichtung (50) der Verschlussvorrichtung (60, 62) zuführbar und aus dieser entnehmbar sind.

5. Probenverarbeitungssystem nach Anspruch 3 oder 4, **dadurch gekennzeichnet, dass** die Greifvorrichtung (50) derart eingerichtet ist, dass von den Probenbehältern (68) gelöste gebrauchte oder gesonderte ungebrauchte Verschlusselemente (69) greifbar sind und von der Verschlussvorrichtung (60, 62) weg oder zu dieser hin bewegt werden.

6. Probenverarbeitungssystem nach einem der Ansprüche 3 bis 5, **dadurch gekennzeichnet, dass** die Probenverarbeitungsvorrichtung derart eingerichtet ist, dass die wenigstens eine Pipettiervorrichtung (40, 42) zu einem in der Verschlussvorrichtung (60, 62) befindlichen und geöffneten Probenbehälter (68) beweglich ist, um Probenflüssigkeit aus dem betreffenden Probenbehälter (68) entnehmen zu können.

7. Probenverarbeitungssystem nach einem der Ansprüche 3 bis 6, **dadurch gekennzeichnet, dass** es ferner wenigstens einen Verschlusselementträger (82) umfasst, mittels welchem ungebrauchte Verschlusselemente (67) auf der Aufnahmeplatte (14) bereitgestellt werden können oder bereitgestellt sind.

8. Probenverarbeitungssystem nach einem der Ansprüche 3 bis 7, **dadurch gekennzeichnet, dass** es einen Abfallbehälter (39) zur Entsorgung von gebrauchten Pipettierspitzen (48) oder/und gebrauchten Verschlusselementen (67) umfasst, wobei vorzugsweise der Abfallbehälter (39) insbesondere hängend an einem in der zweiten Richtung verlaufenden dritten Rand (21) der Aufnahmeplatte (14) angeordnet ist.

9. Probenverarbeitungssystem nach einem der Ansprüche 3 bis 8, **dadurch gekennzeichnet, dass** die Greifvorrichtung (50) mehrere bewegliche Greifer (54) umfasst, die derart eingerichtet sind, dass Probenbehälter (68) oder Verschlusselemente (67) mittels der Greifer (54) von außen greifbar sind.

10. Probenverarbeitungssystem nach einem der vorhergehenden Ansprüche, **dadurch gekennzeichnet, dass** es ferner eine Inkubatorvorrichtung (80) umfasst, die an der Aufnahmeplatte (14) angeordnet ist und in welcher mehrere Probenbehälter (68) aufnehmbar sind.

11. Probenverarbeitungssystem nach einem der vorhergehenden Ansprüche, **dadurch gekennzeichnet, dass** die am ersten Arbeitsarm (20) angebrachte Anzahl Pipettiervorrichtungen (40, 42) gleich der Anzahl Greifvorrichtungen (50) am zweiten Arbeitsarm (22) ist, wobei die Anzahl vorzugsweise eins bis vier ist.

12. Probenverarbeitungssystem nach einem der vorhergehenden Ansprüche, **dadurch gekennzeichnet, dass** auf der Aufnahmeplatte (14) entlang der ersten Richtung (X) in Richtung vom ersten Arbeitsarm (20) zum zweiten Arbeitsarm (22) angeordnet sind:
ein Pipettierspitzenträger (44) mit mehreren Pipettierspitzenrahmen (46), vorzugsweise fünf in der zweiten Richtung (Y) nebeneinander angeordneten Pipettierspitzenrahmen (44) mit jeweils 96 Pipettierspitzen (48);
vorzugsweise ein Inkubator (80), insbesondere geeignet zur Aufnahme von 24 Probenbehältern eines bestimmten Typs;
vorzugsweise wenigstens ein Verschlusselementträger (82) mit ungebrauchten Verschlusselementen (67) für einen bestimmten Typ Probenbehälter;
vorzugsweise ein Behälter (84) für ein Reagenz, insbesondere ein Lysis-Puffer;
wenigstens ein Probenbehälterträger (66) für einen zweiten Typ Probenbehälter, vorzugsweise mehrere Probenbehälterträger für jeweils 24 Probenbehälter des zweiten Typs;
wenigstens ein Probenbehälterträger (64) für einen ersten oder dritten Typ Probebehälter, vorzugsweise mehrere Probenbehälterträger für jeweils 12 Probenbehälter des ersten Typs oder für jeweils 6 Probenbehälter des dritten Typs;
ein Probenbehälterträger (64') für Probenbehälter des ersten oder des dritten Typs;
ein Probenbehälterträger (66') für Probenbehälter des zweiten Typs;
wenigstens eine Verschlussvorrichtung (60), eingerichtet für Probenbehälter des ersten und dritten Typs, vorzugsweise vier derartige Verschlussvorrichtungen (60) in der zweiten Richtung (Y) nebeneinander.

13. Probenverarbeitungssystem nach Anspruch 12, ferner umfassend wenigstens eine weitere Verschlussvorrichtung (62), eingerichtet für Probenbehälter des zweiten Typs, vorzugsweise vier derartige Verschlussvorrichtungen (62) in der zweiten Richtung (Y) nebeneinander.

14. Verarbeitungsverfahren für biologische Proben, insbesondere Körperflüssigkeiten wie Blut, Speichel, Sekrete und dergleichen oder Gewebeproben, umfassend die Schritte:
Bereitstellen von wenigstens einem Probenbehälterträger (64, 66) mit wenigstens einem verschlossenen Probenbehälter (68), in dem eine biologische Probe enthalten ist;
Bewegen des wenigstens einen Probenbehälterträgers (64, 66) auf eine Aufnahmeplatte (14) einer Probenverarbeitungsvorrichtung (12);
**gekennzeichnet durch** folgende Schritte, die vorzugsweise wiederholt durchgeführt werden bis jeder Probenbehälter verarbeitet worden ist:
Aufnehmen von dem bzw. einem Probenbehälter (68) mittels einer Greifvorrichtung (50) der Probenverarbeitungsvorrichtung (12);
Mischen der im Probenbehälter (68) enthaltenen Probenflüssigkeit, insbesondere aus flüssigem biologischem Material oder aus einer Mischung von wenigstens einem Reagenz mit wenigstens teilweise gelöstem biologischen Material, durch Drehen des Probenbehälters (68) mittels der Greifvorrichtung (50), vorzugsweise mit etwa 500 bis 2000 Umdrehungen pro Minute;
Detektieren eines an dem Probenbehälter (68) angebrachten Identifikationsmusters (90), vorzugsweise Barcodes, mittels einer ersten Sensoreinrichtung (51), die an der Greifvorrichtung (50) angebracht ist;
Absetzen des Probenbehälters (68) an einer gewünschten Position in der Probenverarbeitungsvorrichtung (12) mittels der Greifvorrichtung (50) zur weiteren Verarbeitung,
wobei der verschlossene Probenbehälter (68), welcher die biologischen Probe enthält, ein Probenbehälter eines ersten Typs ist, und wobei das Verfahren ferner folgende Schritte umfasst: Bereitstellen von wenigstens einem unverschlossenen, vorzugsweise leeren Probenbehälter eines zweiten Typs in einem zugehörigen Probenbehälterträger (66), wobei an den Probenbehältern des ersten und des zweiten Typs ein Identifikationsmuster (90), vorzugsweise Barcode, angebracht ist und wobei immer zwei Probenbehälter des ersten und des zweiten Typs ein identisches Identifikationsmuster (90) aufweisen,
wobei beim Absetzen des Probenbehälters in dem Probenbehälterträger (64, 66) das am Probenbehälter (68) angebrachte Identifikationsmuster (90) mittels der ersten Sensoreinrichtung (51) an der Greifvorrichtung (50) detektiert wird,
**dadurch gekennzeichnet, dass** wobei der Probenbehälter (68) in einer vorbestimmten Drehstellung relativ zu derjenigen Drehstellung, in welcher das Identifikationsmuster (90) detektiert worden ist, in den Probenbehälterträger (64, 66) abgesetzt wird, so dass mehrere mittels der Greifvorrichtung (50) im Probenbehälterträger abgesetzte Probenbehälter (68) bezogen auf ihr jeweiliges Identifikationsmuster (90) im Wesentlichen gleich ausgerichtet werden,
wobei eine an der Aufnahmeplatte (14) bewegliche Ladevorrichtung (70) eine zweite Sensoreinrichtung (74) umfasst mittels welcher das Identifikationsmuster (90), insbesondere der Barcode von wenigstens einem in einem Probenbehälterträger (64, 66) aufgenommenen Probenbehälter (68) detektiert wird.

15. Verfahren nach Anspruch 14, wobei mittels der Sensoreinrichtung (74) der beweglichen Ladevorrichtung (70) ein Identifikationsmuster, insbesondere ein Barcode eines Pipettierspitzenträgers (44) oder/und eines Verschlussträgers (82) oder/und eines Probenbehälterträgers (64, 66) oder/und eines weiteren Trägers (84) detektiert wird.

## Claims

1. Sample processing system for processing of biological samples, in particular bodily fluids as blood, salvia, secretions and the like or tissue samples, in particular for preparation of samples for a DNA analysis by PCR, comprising
a sample processing device (12)
with a receiving plate (14), wherein the receiving plate (14) is arranged essentially horizontally in a plane defined by a first and a second direction (X, Y);
with a first and a second working arm (20, 22), wherein the first and second working arm (20, 22) are movable along the first direction (X) relative to the receiving plate (14), preferably along a first edge (18) of the receiving plate (14), and wherein the first and the second working arm (20, 22) extend essentially in parallel with respect to each other along the second direction (Y) across the receiving plate (14), wherein on the first working arm (20) at least one pipetting device (40, 42) moveable along the second direction (Y) and along a third direction (Z) orthogonal to the first and the second directions (X, Y) is attached and wherein at the second working arm (22) at least one gripping device (50) moveable along the second direction (Y) and along a third direction (Z) orthogonal to the first and the second directions (X, Y) is attached, wherein grippers (54) provided on the gripping device (50) are rotatable around a gripper axis of rotation (GA) parallel to the third direction (Z); and
with a control device for controlling the pipetting device (40, 42) and the gripping device (50);
a plurality of sample containers (68) filled with samples, in particular liquid samples, or fillable with samples or reagents,
a plurality of pipetting tips (48) usable by means of the pipetting device (40, 42) for aspirating and dispensing of sample liquid or further reagents necessary for the sample processing, such as a lysis-buffer,
wherein the sample containers (68) and the pipetting tips (48) are arranged by means of corresponding sample container carriers (64, 66) and pipetting tip carriers (44) on the receiving plate (14), respectively,
wherein a first sensor device (51) is attached on the at least one gripping device (50), which is configured to detect an identification pattern (90), preferably a barcode, attached on a sample container (68),
**characterized in that**
the control device is configured to control the gripping device (50) such that a gripped sample container (68) is placed in a predetermined rotation position relative to the position in which the identification pattern (90) has been detected into a sample container carrier (64, 66) such that a plurality of sample containers (68) placed by means of the gripping device (50) within the sample container carrier (64, 66) are or can be aligned with respect to the respective identification pattern (90) essentially in the same way,
wherein the sample processing system comprises a loading device (70) moveable on the receiving plate (14) along the first direction (X), wherein the loading device (70) is configured such that it moves pipetting tip carriers (44) and/or closure carriers (82) and/or sample container carriers (64, 66) and/or further carriers (84) necessary for the sample processing along the second direction (Y) towards the receiving plate (14) or away from it, wherein preferably the loading device (70) is moveable along a second edge (19) of the receiving plate, which is opposite to the first edge (18), and
wherein the loading device (70) comprises a second sensor device (74), by means of which the identification pattern (90), in particular the barcode, of at least one of a sample container (68) accommodated in a sample container carrier (64, 66) is detectable.

2. The sample processing system according to claim 1, **characterized in that** an identification pattern, in particular a barcode, of a pipetting tip carrier (44) and/or a closure carrier (82) and/or a sample container carrier (64, 66) and/or a further carrier (84) is detectable.

3. Sample processing system according to claims 1 or 2, **characterized in that** the sample processing device comprises at least one closing device (60, 62) configured such that a sample container (68) accommodated in the closing device (60, 62) is detached from a corresponding closing element (67), such as a cap, stopper or the like, to open the sample container (68), or is connected with such a closing element (67), to close the sample container (68).

4. Sample processing system according to claim 3, **characterized in that** the control device is configured such that opened or closed sample containers (68) may be delivered to or removed from the closing device (60, 62) by means of the gripping device (50).

5. Sample processing system according to claims 3 or 4, **characterized in that** the gripping device (50) is configured such that used closing elements (69) detached from the sample containers (68) or separated, unused closing element (69) may be gripped and are moved away from the closing device (60, 62) or towards the closing device (60, 62).

6. Sample processing system according to one of claims 3 to 5, **characterized in that** the sample processing device is configured such that the at least one pipetting device (40, 42) is moveable towards an opened sample container (68) located within the closing device (60, 62) to be able to extract sample liquid from the corresponding sample container (68).

7. The sample processing system according to one of claims 3 to 6, **characterized in that** it comprises further at least one closing element carrier (82), by means of which unused closing elements (67) can be or are provided on the receiving plate (14).

8. The sample processing system according to one of claims 3 to 7, **characterized in that** it comprises a disposal container (39) for disposal of used pipetting tips (48) and/or used closing elements (67), wherein preferably the disposal container (39) is arranged, in particular hanging, at a third edge (21) of the receiving plate (14), running along the second direction.

9. The sample processing system according to one of claims 3 to 8, **characterized in that** the gripping device (50) comprises a plurality of moveable grippers (54), which are configured such that sample containers (68) or closing elements (67) are grippable by means of the gripper (54) from the outside.

10. The sample processing system according to one of the preceding claims, **characterized in that** it further comprises a incubator device (80), which is arranged on the receiving plate (14) and into which a plurality of sample containers (68) can be accommodated.

11. The sample processing system according to one of the preceding claims, **characterized in that** the number of pipetting devices (40, 42) attached on the first working arm (20) is the same as the number of gripping devices (50) on the second working arm (22), wherein the number is preferably one to four.

12. The sample processing system according to one of the preceding claims, **characterized in that** on the receiving plate (14) along the first direction (X) are arranged in direction from the first working arm (20) to the second working arm 22):
a pipetting tip carrier (44) with a plurality of pipetting tip frames (46), preferably five pipetting tip frames (44) with 96 pipetting tips (48), each arranged next to each other along the second direction (Y);
preferably an incubator (80), in particular suitable for accommodating 24 sample containers of a specific type;
preferably at least one closing element carrier (82) with unused closing elements (67) for a specific type of sample container;
preferably a container (84) for a reagent, in particular a lysis-buffer;
at least one sample container carrier (66) for a second type of sample containers, preferably a plurality of sample container carriers for 24 sample containers of the second type, each;
at least one sample container carrier (64) for a first or third type of sample container, preferably a plurality of sample container carriers for 12 sample containers of the first type, each, or for 6 sample containers of the third type, each;
a sample container carrier (64') for sample containers of the first or the third type;
a sample container carrier (66') for sample containers of the second type;
at least one closing device (60), configured for sample containers of the first and the third type, preferably for such closing devices (60) arranged next to each other along the second direction (Y).

13. The sample processing system according to claim 12, further comprising at least one further closing device (62) configured for sample containers of the second type, preferably four such closing devices (62) arranged next to each other along the second direction (Y).

14. A processing method for biological samples, in particular bodily fluid as blood, salvia, secretions and the like or tissue samples, comprising the steps:
providing of at least one sample container carrier (64, 66) with at least one closed sample container (68), in which a biological sample is contained;
moving of the at least one sample container carrier (64, 66) onto a receiving plate (14) of a sample processing device (12);
**characterized by** the following steps, preferably performed repeatedly until each sample container has been processed:
gripping of the or a sample container (68) by means of a gripping device (50) of the sample processing device (12);
mixing of the sample liquid contained within the sample container (68), in particular of liquid biological material or of a mixture of at least one reagent with at least partially dissolved biological material, by rotating the sample container (68) by means of the gripping device (50), preferably with about 500 to 2000 revolutions per minute;
detecting an identification pattern (90), preferably barcode, attached to the sample container (68) by means of a first sensor unit (51) attached on the gripping device (50);
placing of the sample container (68) at a desired position in the sample processing device (12) by means of the gripping device (50) for further processing,
wherein the closed sample container (68) which contains the biological probe, is a sample container of a first type and wherein the method comprises further the following steps: providing of at least one unclosed, preferably empty sample container of a second type in a corresponding sample container carrier (66), wherein on the sample containers of the first and the second type an identification pattern (90), preferably a barcode, is attached and wherein always two sample containers of the first and the second type comprise an identical identification pattern (90),
wherein during placing the sample container in the sample container carrier (64, 66), the identification pattern (90) attached to the sample container (68) is detected by means of the first sensor unit (51) attached on the gripping device (50),
**characterized in that** the sample container (68) is placed in a predetermined rotation position relative to the rotation position, in which the identification pattern (90) has been detected, into the sample container carrier (64, 66), such that a plurality of sample containers (68) placed into the sample container carrier by means of the gripping device (50) are aligned with respect to their respective identification pattern (90) essentially in the same manner
wherein a loading device (70) moveable on the receiving plate (14) comprises a second sensor device (74), by means of which the identification pattern (90), in particular the barcode, of at least one of a sample container (68) accommodated in a sample container carrier (64, 66) is detected.

15. The processing method according to claim 14, wherein an identification pattern, in particular a barcode, of a pipetting tip carrier (44) and/or a closure carrier (82) and/or a sample container carrier (64, 66) and/or a further carrier (84) is detected by means of the sensor device (74) of the movable loading device (70).

## Revendications

1. Système de traitement d'échantillons pour traiter des échantillons biologiques, en particulier des liquides corporels, comme le sang, la salive, des sécrétions et similaires ou des échantillons de tissu, en particulier pour la préparation d'échantillons pour une analyse d'ADN au moyen d'une PCR, comprenant
un dispositif de traitement d'échantillons (12)
- comprenant une plaque de réception (14), dans lequel la plaque de réception (14) est disposée sensiblement horizontalement dans un plan défini par une première et une deuxième direction (X, Y) ;
- comprenant un premier et un deuxième bras de travail (20, 22), dans lequel le premier et le deuxième bras de travail (20, 22) sont mobiles dans la première direction (X) par rapport à la plaque de réception (14), de préférence le long d'un premier bord (18) de la plaque de réception (14), et dans lequel le premier et le deuxième bras de travail (20, 22) s'étendent sensiblement parallèlement l'un à l'autre dans la deuxième direction (Y) au-dessus de la plaque de réception (14), dans lequel au moins un dispositif de pipetage (40, 42) mobile dans la deuxième direction (Y) et dans une troisième direction (Z) orthogonale à la première et à la deuxième direction (X, Y) est installé sur le premier bras de travail (20), et dans lequel au moins un dispositif de préhension (50) mobile dans la deuxième direction (Y) et dans une troisième direction (Z) orthogonale à la première et à la deuxième direction (X, Y) est installé sur le deuxième bras de travail (22), dans lequel des grappins (54) prévus sur le dispositif de préhension (50) peuvent tourner autour d'un axe de rotation de grappin (GA) parallèle à la troisième direction (Z) ; et
- comprenant un système de commande pour piloter le dispositif de pipetage (40, 42) et le dispositif de préhension (50) ;
plusieurs contenants d'échantillons (68) remplis d'échantillons, en particulier d'échantillons liquides, ou pouvant être remplis d'échantillons ou de réactifs,
plusieurs pointes de pipetage (48) utilisables au moyen du dispositif de pipetage (40, 42) pour aspirer et dispenser du liquide d'échantillon ou d'autres réactifs nécessaires pour le traitement d'échantillons, par exemple un tampon de lyse, dans lequel le contenant d'échantillons (68) et les pointes de pipetage (48) sont disposés sur la plaque de réception (14) au moyen de supports de contenants d'échantillons (64, 66) ou de supports de pointes de pipetage (44) associés,
dans lequel est installé sur l'au moins un dispositif de préhension (50) un premier système capteur (51) qui est configuré pour détecter un motif d'identification (90), de préférence un code à barres, installé sur un contenant d'échantillons (68),
**caractérisé en ce que** le système de commande est configuré pour piloter le dispositif de préhension (50) de manière à déposer dans un support de contenants d'échantillons (64, 66) un contenant d'échantillons (68) saisi dans une position de rotation prédéfinie par rapport à la position de rotation dans laquelle précisément le motif d'identification (90) a été détecté de sorte que plusieurs contenants d'échantillons (68) déposés dans le support de contenants d'échantillons (64, 66) au moyen du dispositif de préhension (50) soient amenés dans une orientation sensiblement identique ou se trouvent dans une orientation sensiblement identique par rapport à leur motif d'identification (90) respectif,
dans lequel le système de traitement d'échantillons comprend un dispositif de charge (70) pouvant être déplacé par rapport à la plaque de réception le long de la première direction (X), dans lequel le dispositif de charge (70) est configuré de telle manière qu'il déplace des supports de pointes de pipetage (44) ou/et des supports de fermeture (82) ou/et des supports de contenants d'échantillons (64, 66) ou/et d'autres supports (84) nécessaires pour le traitement d'échantillons dans la deuxième direction (Y) en direction de la plaque de réception (14) ou de manière à s'en éloigner, dans lequel de préférence le dispositif de charge (70) peut être déplacé le long d'un second bord (19) de la plaque de réception, lequel fait face au premier bord (18), et
dans lequel le dispositif de charge (70) comprend un deuxième système capteur (74) au moyen duquel le motif d'identification (90), en particulier le code à barres, d'au moins un contenant d'échantillons (68) reçu dans un support de contenants d'échantillons (64, 66) est détectable.

2. Système de traitement d'échantillons selon la revendication 1, **caractérisé en ce qu'**un motif d'identification, en particulier un code à barres, d'un support de pointes de pipetage (44) ou/et d'un support de fermeture (82) ou/et d'un support de contenants d'échantillons (64, 66) ou/et d'un autre support (84) est détectable.

3. Système de traitement d'échantillons selon la revendication 1 ou 2, **caractérisé en ce que** le dispositif de traitement d'échantillons comprend au moins un dispositif de fermeture (60, 62) qui est configuré de telle manière qu'un contenant d'échantillons (68) reçu dans le dispositif de fermeture (60, 62) soit détaché d'un élément de fermeture (67) associé, comme le couvercle, le bouchon ou similaire, pour ouvrir le contenant d'échantillons (68), ou est relié à un élément de fermeture (67) de ce type pour fermer le contenant d'échantillons (68).

4. Système de traitement d'échantillons selon la revendication 3, **caractérisé en ce que** le système de commande est configuré de telle manière que des contenants d'échantillon (68) ouverts ou fermés puissent être amenés au dispositif de fermeture (60, 62) et puissent en être retirés au moyen du dispositif de préhension (50).

5. Système de traitement d'échantillons selon la revendication 3 ou 4, **caractérisé en ce que** le dispositif de préhension (50) est configuré de telle manière que des éléments de fermeture utilisés de manière détachée des contenants d'échantillons (68) ou non utilisés et séparés puissent être saisis et soient déplacés de manière à s'éloigner du dispositif de fermeture (60, 62) ou en direction de celui-ci.

6. Système de traitement d'échantillons selon l'une des revendications 3 à 5, **caractérisé en ce que** le dispositif de traitement d'échantillons est configuré de telle manière que l'au moins un dispositif de pipetage (40, 42) puisse être déplacé vers un contenant d'échantillons (68) se trouvant dans le dispositif de fermeture (60, 62) et ouvert pour pouvoir retirer du liquide d'échantillon hors du contenant d'échantillons (68) concerné.

7. Système de traitement d'échantillons selon l'une des revendications 3 à 6, **caractérisé en ce qu'**il comprend en outre au moins un support d'éléments de fermeture (82) au moyen duquel des éléments de fermeture (67) non utilisés peuvent être fournis ou sont fournis sur la plaque de réception (14).

8. Système de traitement d'échantillons selon l'une des revendications 3 à 7, **caractérisé en ce qu'**il comprend un contenant de déchets (39) pour éliminer des pointes de pipetage (48) usagées ou/et des éléments de fermeture (67) usagés, dans lequel de préférence le contenant de déchets (39) est disposé en particulier en étant suspendu à un troisième bord (21), s'étendant dans la deuxième direction, de la plaque de réception (14).

9. Système de traitement d'échantillons selon l'une des revendications 3 à 8, **caractérisé en ce que** le dispositif de préhension (50) comprend plusieurs grappins (54) pouvant être déplacés, lesquels sont configurés de manière à pouvoir saisir depuis l'extérieur des contenants d'échantillons (68) ou des éléments de fermeture (67) au moyen des grappins (54).

10. Système de traitement d'échantillons selon l'une des revendications précédentes, **caractérisé en ce qu'**il comprend en outre un dispositif incubateur (80) qui est disposé sur la plaque de réception (14) et dans lequel plusieurs contenants d'échantillons (68) peuvent être reçus.

11. Système de traitement d'échantillons selon l'une des revendications précédentes, **caractérisé en ce que** le nombre de dispositifs de pipetage (40, 42) installés sur le premier bras de travail (20) est égal au nombre des dispositifs de préhension (50) sur le deuxième bras de travail (22), dans lequel le nombre va de préférence de 1 à 4.

12. Système de traitement d'échantillons selon l'une des revendications précédentes, **caractérisé en ce que** sont disposés sur la plaque de réception (14) le long de la première direction (X) dans la direction du premier bras de travail (20) vers le deuxième bras de travail (22) :
un support de pointes de pipetage (44) comprenant plusieurs cadres de pointes de pipetage (46), de préférence cinq cadres de pointes de pipetage (44) disposés côte à côte dans la deuxième direction (Y) comprenant respectivement 96 pointes de pipetage (48) ;
de préférence un incubateur (80), adapté en particulier pour recevoir 24 contenants d'échantillons d'un type défini ;
de préférence au moins un support d'éléments de fermeture (82) comprenant des éléments de fermeture (67) non utilisés pour un type défini de contenant d'échantillons ;
de préférence un contenant (84) pour un réactif, en particulier un tampon de lyse ;
au moins un support de contenants d'échantillons (66) pour un deuxième type de contenant d'échantillons, de préférence plusieurs supports de contenants d'échantillons pour respectivement 24 contenants d'échantillons du deuxième type ;
au moins un support de contenants d'échantillons (64) pour un premier ou un troisième type de contenant d'échantillon, de préférence plusieurs supports de contenants d'échantillons pour respectivement 12 contenants d'échantillons du premier type ou pour respectivement 6 contenants d'échantillons du troisième type ;
un support de contenants d'échantillons (64') pour des contenants d'échantillons du premier ou du troisième type ;
un support de contenants d'échantillons (66') pour des contenants d'échantillons du deuxième type ;
au moins un dispositif de fermeture (60) configuré pour des contenants d'échantillons du premier et du troisième type, de préférence quatre dispositifs de fermeture (60) de ce type dans la deuxième direction (Y) côte à côte.

13. Système de traitement d'échantillons selon la revendication 12, comprenant en outre au moins un autre dispositif de fermeture (62) configuré pour des contenants d'échantillons du deuxième type, de préférence quatre dispositifs de fermeture (62) de ce type dans la deuxième direction (Y) côte à côte.

14. Procédé de traitement pour des échantillons biologiques, en particulier des liquides corporels, comme du sang, de la salive, des sécrétions et similaires ou des échantillons de tissu, comprenant les étapes suivantes :
prévoir au moins un support de contenants d'échantillons (64, 66) comprenant au moins un contenant d'échantillons (68) fermé dans lequel un échantillon biologique est contenu ;
déplacer l'au moins un support de contenants d'échantillons (64, 66) sur une plaque de réception (14) d'un dispositif de traitement d'échantillons (12) ;
**caractérisé par** des étapes suivantes, qui sont mises en œuvre de préférence de manière répétée jusqu'à ce que chaque contenant d'échantillons ait été traité :
recevoir le ou un contenant d'échantillons (68) au moyen d'un dispositif de préhension (50) du dispositif de traitement d'échantillons (12) ;
mélanger le liquide d'échantillon contenu dans le contenant d'échantillon (68), en particulier composé d'un matériau biologique liquide ou d'un mélange d'au moins un réactif avec du matériau biologique au moins en partie dissous, en faisant tourner le contenant d'échantillons (68) au moyen du dispositif de préhension (50), de préférence avec environ 500 à 2000 tours par minute ;
détecter un motif d'identification (90) installé sur le contenant d'échantillons (68), de préférence d'un code à barres, au moyen d'un premier système capteur (51) qui est installé sur le dispositif de préhension (50) ;
déposer le contenant d'échantillons (68) sur une position souhaitée dans le dispositif de traitement d'échantillons (12) au moyen du dispositif de préhension (50) pour le traitement ultérieur,
dans lequel le contenant d'échantillons (68) fermé qui contient l'échantillon biologique est un contenant d'échantillons du premier type, et dans lequel le procédé comprend en outre des étapes suivantes : fournir au moins un contenant d'échantillons non fermé, de préférence vide, d'un deuxième type dans un support de contenants d'échantillons (66) associé, dans lequel un motif d'identification (90), de préférence un code à barres, est installé sur les contenants d'échantillons du premier et du deuxième type, et dans lequel systématiquement deux contenants d'échantillons du premier et du deuxième type présentent un motif d'identification (90) identique,
dans lequel lors du dépôt du contenant d'échantillons dans le support de contenants d'échantillons (64, 66), le motif d'identification (90) installé sur le contenant d'échantillons (68) est détecté au moyen du premier système capteur (51) sur le dispositif de préhension (50),
**caractérisé en ce que** le contenant d'échantillons (68) est déposé dans le support de contenants d'échantillons (64, 66) dans une position de rotation prédéfinie par rapport à la position de rotation dans laquelle précisément le motif d'identification (90) a été détecté, de telle sorte que plusieurs contenants d'échantillons (68) déposés dans le support de contenants d'échantillons au moyen du dispositif de préhension (50) soient amenés dans une orientation sensiblement identique par rapport à leur motif d'identification (90) respectif,
dans lequel un dispositif de charge (70) pouvant être déplacé sur la plaque de réception (14) comprend un deuxième système capteur (74) au moyen duquel le motif d'identification (90), en particulier le code à barres, d'au moins un contenant d'échantillons (68) reçu dans un support de contenants d'échantillons (64, 66), est détecté.

15. Procédé selon la revendication 14, dans lequel un motif d'identification, en particulier un code à barres, d'un support de pointes de pipetage (44) ou/et d'un support de fermeture (82) ou/et d'un support de contenants d'échantillons (64, 66) ou/et d'un autre support (84) est détecté au moyen du système capteur (74) du dispositif de charge (70) mobile.
